# EUROPEAN PATENT SPECIFICATION

(11) **EP 3 952 700 B1**
(45) Date of publication and mention of the grant of the patent: **07.08.2024**
(21) Application number: 19923783.5
(22) Date of filing: 08.04.2019
(51) Int. Cl.: A47B 77/02, A47B 9/00, B63B 29/04, B63B 29/22, B64D 11/04, B25H 1/12, B25H 1/16

(54) **ERGO WORK STATION**
ERGONOMISCHER ARBEITSPLATZ
POSTE DE TRAVAIL ERGONOMIQUE

(43) Date of publication of application: 16.02.2022
(73) Proprietor: Smart Galley Designs Inc., Moncton, NB E1G 3H5 (CA)
(72) Inventor: JANSEN, Monica Henrica Johanna, Moncton, NB E1G 3H5 (CA); MCKAY, Wayne Edward, Moncton, NB E1G 3H5 (CA)
(74) Representative: J A Kemp LLP
(86) International application number: PCT/CA2019/050423
(87) International publication number: WO 2020/206524

(56) References cited:
- DE-U1- 202012 101 785
- JP-U- H0 311 436
- US-A1- 2009 180 843
- ERIN: "Kitchen Design Idea - Adjustable Height Kitchen Island", 14 November 2016 (2016-11-14), XP055976870, Retrieved from the Internet <URL:https://www.contemporist.com/kitchen-design-idea-adjustable-height-island/> [retrieved on 20221101]

## Description

### BACKGROUND

Work stations may be used to perform various tasks, such as food preparation. However, not all work stations are appropriate for use in particular work environments. Food preparation in a marine work environment may be particularly difficult given limited space and the motion, such as rolling and pitching, caused by a moving ship, especially in hazardous sea conditions.

United States Patent 6,213,575 to Brin et al. describes a kitchen countertop assembly includes multiple, integrated work spaces having associated surfaces which can be adjusted vertically. At least two of the work surfaces can be individually, vertically adjusted relative to the remainder of the work surfaces. JP H03 11436 U discloses an adjustable height table. "Kitchen Design Idea - Adjustable Height Kitchen Island" (2016-11 -14), retrieved from the internet, URL: https://www.contemporist.com/kitchen-design-idea-adjustableheight-island/ [retrieved on 2022-11 -01] discloses an adjustable height kitchen island.

United States Patent 3,472,219 to Roy et al. describes a collapsible galley assembly for use in camping trailers and the like. The galley assembly includes a box-like lower frame and a box-like upper frame which is slidably received by the lower frame and which carries the usual sink, stove, and the like. The lower frame is provided with a plurality of vertically extending guide channels which slidably receive vertically extending guide members on the upper frame.

### SUMMARY

In general, in one aspect, embodiments are related to a workstation. The workstation includes a frame panel having a first inset and cap beams connected to the frame panel. The workstation also includes an inner skirt connected to and disposed at least partially around the frame panel. The inner skirt includes a stepwell portion including a kickplate disposed at least partially around the frame panel. The workstation also includes a first mount plate connected to the kickplate of the inner skirt and extending inwardly relative to the workstation. The workstation also includes an outer skirt disposed at least partially around the inner skirt. The outer skirt is slidable with respect to the inner skirt in a direction parallel to the central axis. The workstation also includes a first mounting brace connected to at least two of the cap beams. The workstation also includes a second mount plate connected to the first mounting brace and disposed inwardly relative to the workstation. The workstation also includes a first actuator disposed between the first mount plate and the second mount plate, and through the first inset. The first actuator is configured to change in length and hence to change a distance between the first mount plate and the second mount plate. The workstation also includes a work surface connected to the outer skirt.

In another aspect, embodiments are related to a method of modifying a marine vessel. The marine vessel includes a maritime hull, a propulsion system connected to the maritime hull, and a first connector connected to the maritime hull. The method includes attaching a second connector of the workstation to the first connector of the marine vessel. The workstation includes a frame panel having a first inset and cap beams connected to the frame panel. The workstation also includes an inner skirt connected to and disposed at least partially around the frame panel. The inner skirt includes a stepwell portion including a kickplate disposed at least partially around the frame panel. The workstation also includes a first mount plate connected to the kickplate of the inner skirt and extending inwardly relative to the workstation. The workstation also includes an outer skirt disposed at least partially around the inner skirt. The outer skirt is slidable with respect to the inner skirt in a direction parallel to the central axis. The workstation also includes a first mounting brace connected to at least two of the cap beams. The workstation also includes a second mount plate connected to the first mounting brace and disposed inwardly relative to the workstation. The workstation also includes a first actuator disposed between the first mount plate and the second mount plate, and through the first inset. The first actuator is configured to change in length and hence to change a distance between the first mount plate and the second mount plate. The workstation also includes a work surface connected to the outer skirt.

In another aspect, embodiments are related to a method of using a workstation. The workstation includes a frame panel having a first inset and cap beams connected to the frame panel. The workstation also includes an inner skirt connected to and disposed at least partially around the frame panel. The inner skirt includes a stepwell portion including a kickplate disposed at least partially around the frame panel. The workstation also includes a first mount plate connected to the kickplate of the inner skirt and extending inwardly relative to the workstation. The workstation also includes an outer skirt disposed at least partially around the inner skirt. The outer skirt is slidable with respect to the inner skirt in a direction parallel to the central axis. The workstation also includes a first mounting brace connected to at least two of the cap beams. The workstation also includes a second mount plate connected to the first mounting brace and disposed inwardly relative to the workstation. The workstation also includes a first actuator disposed between the first mount plate and the second mount plate, and through the first inset. The first actuator is configured to change in length and hence to change a distance between the first mount plate and the second mount plate. The workstation also includes a work surface connected to the outer skirt. The method includes actuating the actuator to change a height of the outer skirt relative to the inner skirt.

Other aspects of the invention will be apparent from the following description and the appended claims.

### BRIEF DESCRIPTION OF DRAWINGS

FIG. 1, FIG. 2, and FIG. 3 show different views of a workstation, in accordance with one or more embodiments.
FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, FIG. 18, FIG. 19, FIG. 20, FIG. 21, FIG. 22, and FIG. 23 show different components of a workstation, in accordance with one or more embodiments.
FIG. 24, FIG. 25, FIG. 26, FIG. 27, FIG. 28, FIG. 29, FIG. 30, FIG. 31, and FIG. 32 show different views of an alternative embodiment of a workstation, in accordance with one or more embodiments.
FIG. 33 shows a marine vessel modified to carry a workstation, in accordance with one or more embodiments.
FIG. 34 is a flowchart of a method for modifying a marine vessel to carry a workstation, in accordance with one or more embodiments.
FIG. 35, FIG. 36, FIG. 37, FIG. 38, and FIG. 39 show ergonomic working heights when performing food preparation tasks.

### DETAILED DESCRIPTION

Specific embodiments of the invention will now be described in detail with reference to the accompanying figures. Like elements in the various figures are denoted by like reference numerals for consistency.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

In general, embodiments of the invention relate to a workstation, which also could be referred-to as an "ergonomic workstation" or an "ergo workstation". The workstation is provided with actuators so that a user of the workstation can adjust the height of the work surface to accommodate both a user's different height preferences for different tasks, and also the heights of different users of the workstation. In this manner, the workstation of the one or more embodiments increases user comfort and decreases the probability that a user will suffer from repetitive use injuries, particularly in the back, shoulders, arms, and hands. Height adjustability may be measured from the torso of the individual worker. A normal work surface is usually at 91,44 cm (36 inches), and the workstation of the one or more embodiments can be adjusted to a further 20,32 to 25,4 cm (8 to 10 inches).

The workstation is also provided with features to aid the user to stand for extended periods of time. For example, foot rails are provided in order to allow a user to rest one foot while working on the workstation. Thus the workstation of the one or more embodiments helps to reduce leg fatigue, which in turn reduces fatigue of the upper body. The workstation includes a number of features that optimize the workstation for use in a marine environment. Thus, for example, the workstation may have one or more of the following features: reinforced actuators to accommodate horizontal force and torque loads due to the motion of the marine vessel, rounded corners, grab rails for grasping, and a compact design. The term "compact design" means that, except for grab rails and kick plates, no components extend more than 2,54 cm (an inch) from the body of the workstation. Rounded corners, a compact design, and handrails are features of the workstation design that reduce the probability of injury should an accidental impact occur between the workstation and a user's body while the marine vessel is operating in heavy seas.

The workstation described herein may be used as a food preparation workstation and is specifically designed for use in a marine environment (i.e., on a ship or boat, particularly one on open water). However, the workstation described herein may be used for many different purposes, and thus neither the claims nor the embodiments described herein should be limited to food preparation or to the context of use on a marine vessel, unless explicitly limited.

Some of the embodiments described herein may overcome several technical challenges in the design and construction of workstations, particularly food preparation workstations for installation on a marine vessel. Such embodiments provide significant improvements over the known art.

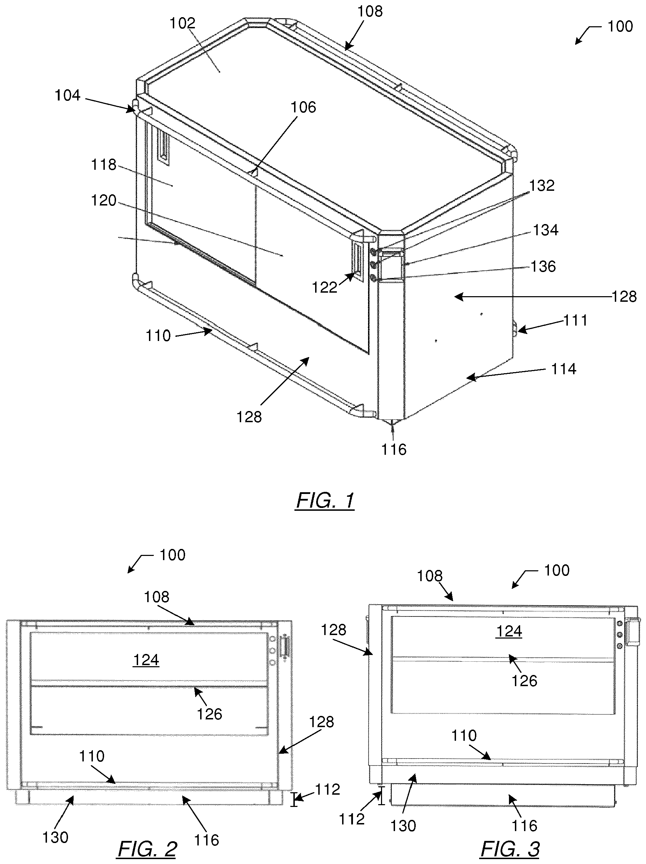

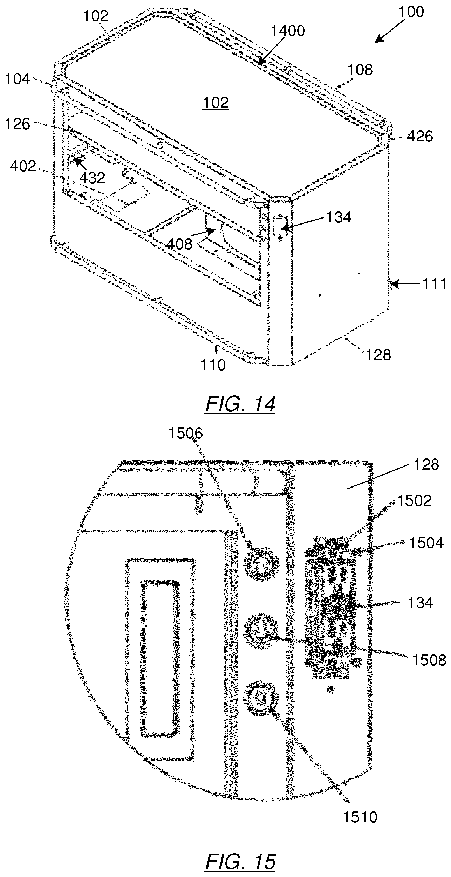

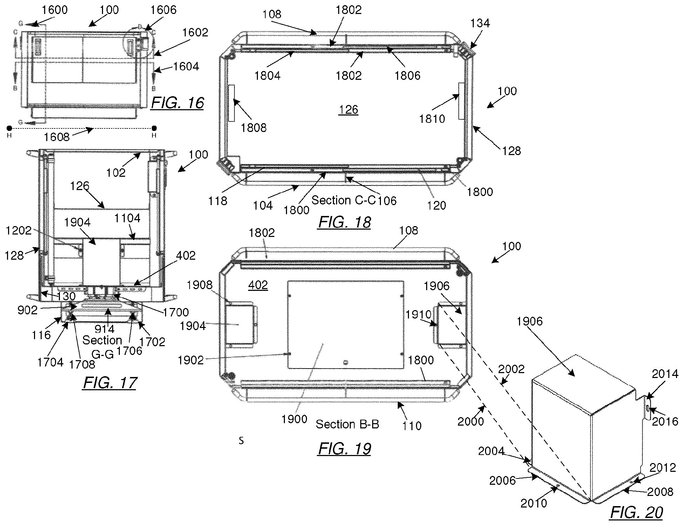

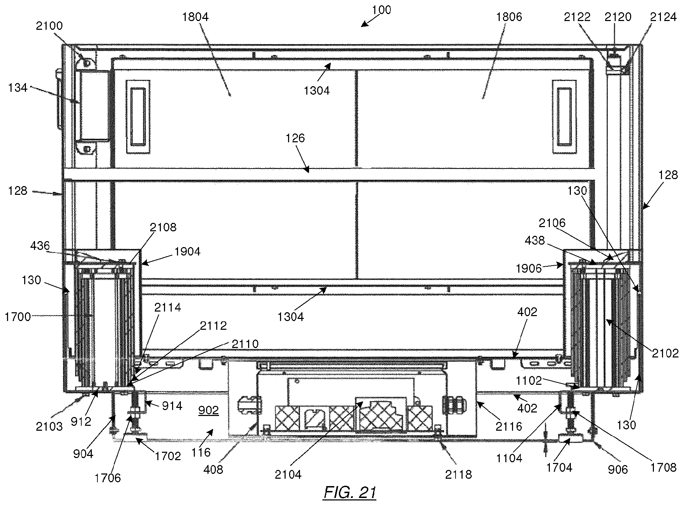

The technical improvements of some embodiments include establishing the sliding relationship between inner and outer overlapping skirts together with a proper fit (see FIG. 1 through FIG. 21, and more particularly FIG. 17 and FIG. 21). The technical improvements of some embodiments also include designing the sliding doors to have an opening that was as large as possible given that the available room for the doors was limited due to the arrangement of inner and outer skirts (see FIG. 1 through FIG. 21, and more particularly FIG. 21). The technical improvements of some embodiments also include finding a suitable attachment method for the foot rails and grab rails that would not compromise the rigidity of the main sheet metal of the inner and/or outer skirts (see FIG. 1 through FIG. 21, and more particularly FIG. 1 and FIG. 18). The technical improvements of some embodiments also include finding wash down rated, stainless steel buttons that could have logo and a light (see FIG. 1 through FIG. 21, and more particularly FIG. 15).

The technical improvements of some embodiments also include installing two 110 V plugs fitted on the corners of the cabinet and changing the back cover from the buttons to also cover the back of the plug (see FIG. 1 through FIG. 21, and more particularly FIG. 15). The technical improvements of some embodiments also include reworking the electrical system to allow for the outlets (see FIG. 1 through FIG. 21, and more particularly FIG. 15 and FIG. 21 through FIG. 23). The technical improvements of some embodiments also include installing a sufficiently-sized electrical panel to allow for the extra components desired for the outlets, while keeping water out of the electrical panel (see FIG. 1 through FIG. 21, and more particularly FIG. 21 through FIG. 23).

The technical improvements of some embodiments also include adding light emitting diode (LED) lights in the corners, ensuring the lights could physically be installed inside the cabinet (see FIG. 1 through FIG. 21, and more particularly FIG. 18 and FIG. 21). The technical improvements of some embodiments also include designing the electrical system to allow for the lights and ensuring the wires could not be accessed by the users (see FIG. 1 through FIG. 21, and more particularly FIG. 19 and FIG. 21). The technical improvements of some embodiments also include adding a button for the LED lights that could work as a 3-way switch, with a light on the button that comes only on when the LED lights are on (see FIG. 1 through FIG. 21, and more particularly FIG. 15).

The technical improvements of some embodiments also include designing actuators in the form of lifting columns that have sufficient strength and durability to operate in a difficult marine environment (see FIG. 1 through FIG. 21, and more particularly FIG. 17 and FIG. 21). The technical improvements of some embodiments include covering the lifting columns to make them water resistant (see FIG. 1 through FIG. 21, and more particularly FIG. 17 and FIG. 21).

The technical improvements of some embodiments include mounting the electrical panel in the floor of the cabinet, while allowing for relatively easy access for maintenance (see FIG. 1 through FIG. 21, and more particularly FIG. 21 through FIG. 23). The technical improvements of some embodiments include finding a way to mount the leg levelers (feet) that would not affect the overall look of the cabinet, while ensuring a good stability (see FIG. 1 through FIG. FIG. 21, and more particularly FIG. 17 and FIG. 21). The technical improvements of some embodiments include finding a simple way to mount the leg levelers (feet) for quick onsite adjustment during initial set up, including adjusting for varying floor height in a marine vessel (see FIG. 1 through FIG. 21, and more particularly FIG. 17 and FIG. 21).

The technical improvements of some embodiments include ensuring the cabinet could be assembled and taken apart onsite (see FIG. 1 through FIG. 21). The technical improvements of some embodiments include ensuring the design would allow for simple cable routing during installation or maintenance, while not allowing the users to access the cable during everyday use (see FIG. 1 through FIG. 21, and more particularly FIG. 19 and FIG. 21). The technical improvements of some embodiments include sourcing the smallest electrical components to ensure such components would all fit in a very small electrical panel (see FIG. 1 through FIG. 21, and more particularly FIG. 21 through FIG. 23).

As used herein, the term "connected" or "attached", either as an adjective or as a verb, means that two or more components are physically connected to each other. However, the two or more components may include intervening components. Thus, for example, "component A" is attached to or connected to "component C" even if "component B" is the only piece that connects "component A" to "component C" (i.e., "component A" and "component C" are not directly touching, but yet are "connected"). However, if a component is "directly" connected to another component, then the two or more components must be in direct physical contact with each other. Thus, for example, if "component A" is "directly connected" to "component C", then "component A" and "component C" are physically touching and also attached to each other. Unless specified otherwise herein, the terms "connected" or "attached" automatically contemplate both direct and indirect connection between the two or more components.

As used herein, ordinal terms are used merely for convenience to aid in distinguishing between multiple components that are similar in structure but still different from each other. Unless otherwise specified, ordinal terms associated with components do not imply a fixed arrangement of the components. Likewise, unless otherwise specified, ordinal terms do not designate an order of importance among components, or require a particular sequence of components. Thus, for example, a "first mount plate" and a "second mount plate" could be interchanged with each other in some embodiments. Additionally, while a particular embodiment may require two mount plates (i.e., "first" and "second" mount plates), one is not necessarily subordinate to the other.

As used herein, the term "attachment device" refers to a screw, a bolt, rivet, peg, stud, or other fastener useful for connecting two objects together. An "attachment device" also automatically contemplates any accompanying hardware, such as but not limited to washers, nuts, *etc.*

The following is a list of reference numbers and corresponding objects as used throughout the Figures.
- 100: Workstation
- 102: Work Surface
- 104: First Grab Rail
- 106: Connecting Piece
- 108: Second Grab Rail
- 110: First Foot Rail
- 111: Second Foot Rail
- 112: Clearance
- 114: Bottom Portion
- 116: Stepwell Portion
- 118: First Door
- 120: Second Door
- 122: Handle
- 124: Space
- 126: Shelf
- 128: Outer Skirt
- 130: Inner Skirt
- 132: Up/Down Buttons
- 134: Electrical Outlet
- 136: Button
- 400: Inner Frame
- 402: Frame Panel
- 404: Central Cutout
- 406: First Bracket
- 408: Second Bracket
- 410: First Inset
- 412: Second Inset
- 414: Flange
- 416: First Corner
- 418: Second Corner
- 420: Third Corner
- 422: First Cap Beam
- 424: Second Cap Beam
- 426: Third Cap Beam
- 428: Fourth Cap Beam
- 430: First Void
- 431: Second Void
- 432: First Mounting Brace
- 434: Second Mounting Brace
- 436: First Mount Plate
- 438: Second Mount Plate
- 440: Second Gusset
- 500: Mount Plate Hole
- 600: First Weld Nut
- 602: Second Weld Nut
- 604: Wire Guide
- 606: First Brace
- 608: Second Brace
- 700: Third Weld Nut
- 702: Fourth Weld Nut
- 704: First Flange
- 706: Second Flange
- 708: First Notch
- 710: Second Notch
- 900: Side Cover
- 902: First Kick Plate
- 904: Second Kick Plate
- 906: Third Kick Plate
- 908: Fourth Kick Plate
- 910: Hull or Ground
- 912: Third Mount Plate
- 914: First Attachment Brace
- 1000: Mount Plate Holes
- 1002: First Attachment Brace Slot
- 1004: First Attachment Brace Hole
- 1100: Fourth Corner
- 1102: Fourth Mount Plate
- 1104: Second Attachment Brace
- 1200: Doorway
- 1202: Hole A
- 1204: Hole B
- 1206: Hole C
- 1300: Phantom Line
- 1302: Additional Access Space
- 1304: Inner Flange
- 1306: Central Axis
- 1400: Ridge
- 1502: First Screw
- 1504: Second Screw
- 1506: First Button
- 1508: Second Button
- 1510: Light Button
- 1600: Section G-G
- 1602: Section C-C
- 1604: Section B-B
- 1606: Circle D
- 1608: Section H-H
- 1700: First Actuator
- 1702: First Foot
- 1704: Second Foot
- 1706: First Nut
- 1708: Second Nut
- 1800: First Door Track
- 1802: Second Door Track
- 1804: Third Door
- 1806: Fourth Door
- 1808: First Light
- 1810: Second Light
- 1900: Hatch
- 1902: Hatch Screw
- 1904: First Column Cover
- 1906: Second Column Cover
- 1908: First Column Cover Screw
- 1910: Second Column Cover Screw
- 2000: First Dotted Line
- 2002: Second Dotted Line
- 2004: First Column Cover Flange
- 2006: Second Column Cover Flange
- 2008: Third Column Cover Flange
- 2010: First Column Cover Hole
- 2012: Second Column Cover Hole
- 2014: Tab
- 2016: Tab Hole
- 2100: Bracket Screw
- 2102: Second Actuator
- 2103: Mount Plate Screw
- 2104: Junction Box
- 2106: Wires
- 2108: Telescoping Skirt
- 2110: Inner Layer
- 2112: Middle Layer
- 2114: Outer Layer
- 2116: Junction Box Cover
- 2118: Junction Box Screw
- 2120: LED Strip
- 2122: Clamp
- 2124: Clamp Bolt
- 2200: Junction Box Tray
- 2202: Tray Rail
- 2204: Retainer
- 2206: Control Unit
- 2208: First Tray Bracket
- 2210: Second Tray Bracket
- 2212: Attachment Device
- 2300: First Terminal Block
- 2302: Power Supply
- 2304: Circuit Breaker
- 2306: Fuse Holder
- 2308: Ground Terminal Block
- 2310: Second Terminal Block
- 2312: First Bolt and Nut Assembly
- 2314: Second Bolt and Nut Assembly
- 2400: Plumbed Workstation
- 2400A: Alternate Section A-A
- 2400B: Alternate Section B-B
- 2400C: Alternate Section C-C
- 2402: Main Faucet
- 2404: Secondary Faucet
- 2406: Main Valve Handle
- 2408: Secondary Valve Handle
- 2410: Primary Sink
- 2412: Secondary Sink
- 2414: Tertiary Sink
- 2416: Drain
- 2418: Alternate Outer Skirt
- 2420: Alternate Inner Skirt
- 2422: Alternate Actuator
- 2424: Alternate First Mount Plate
- 2426: Alternate Second Mount Plate
- 2428: Alternate First Door
- 2430: Alternate Second Door
- 2432: Alternate Door Track
- 2434: Alternate Worksurface
- 2436: Alternate Grab rail
- 2438: Alternate Foot Rail
- 2440: Alternate Frame Panel
- 2442: Alternate Column Cover
- 2444: Alternate Fastener
- 2446: LED Light Strip
- 2448: Alternate Electrical Outlet
- 2450: Alternate Junction Box
- 2452: Alternate Frame Brace
- 2900: Cooking Workstation
- 2902: Modified Outer Skirt
- 2904: Modified Inner Skirt
- 2906: Modified Work Surface
- 2908: First Heating Element
- 2910: Second Heating Element
- 2912: Control Knob
- 2914: Modified Up/Down Buttons
- 2916: First Retaining Feature
- 2918: Second Retaining Feature
- 3100: Wall Workstation
- 3102: Side
- 3300: Marine Vessel
- 3302: Marine Workstation
- 3304: Maritime Hull
- 3306: Propulsion System
- 3308: First Connector
- 3310: Second Connector
- 3312: Third Connector
- 3314: Fourth Connector
- 3400: Step in Flowchart
- 3500: Cook
- 3501: Z-Axis
- 3502: Constant-Height Workstation
- 3504: Preparation Surface
- 3506: First Height
- 3508: Second Height
- 3510: Third Height
- 3600: Cook
- 3601: Common Z-Axis
- 3602: Adjustable Workstation
- 3900: Intermediate Height

FIG. 1, FIG. 2, and FIG. 3 show different views of a workstation, in accordance with one or more embodiments. FIG. 1 through FIG. 3 refer to the same workstation and thus use similar reference numerals and have similar components. FIG. 1 through FIG. 3 show an overview of one embodiment of the workstation according to one or more embodiments.

Workstation (100) provides a work surface and possibly storage for various activities. The activities may be any activities for which the workstation (100) is useful, including but not limited to food preparation, tool use, machining, mechanical engineering, electrical engineering, optical engineering, and hobby activities. In one embodiment, the workstation (100) is particularly useful as a food preparation workstation, and more particularly useful when installed in a marine vessel.

The various components of the workstation (100) may be formed from a number of different materials. In the case of a food preparation workstation, the workstation (100) may be fashioned from primarily stainless-steel components, except for electrical wiring, electrical components, and plastic covers as desired. In an embodiment, metal components may be made from industrial grade stainless steel, such as 16 grade stainless steel, which may be useful for health, safety, and adjustability of the workstation (100). However, the workstation (100) may also be fashioned from different plastics and metals, depending on the intended use of the workstation (100). In an embodiment, wood may be employed, particularly with respect to providing a cutting surface for the workstation (100). Parts of the workstation, including the work surface (102) may also be made from other materials, such as disposable (paper) marble or silicone, which may be particularly useful to act as a cutting board. The work surface (102) may be color coded to guide a user to use appropriate sections of the work surface (102) for different meat types and food groups, such as beef (red), chicken (yellow) vegetables (green). In an embodiment, the work surface (102), and workstation (100) generally, uses materials and has a design which comply with health and safety standards of one or more different governmental jurisdictions.

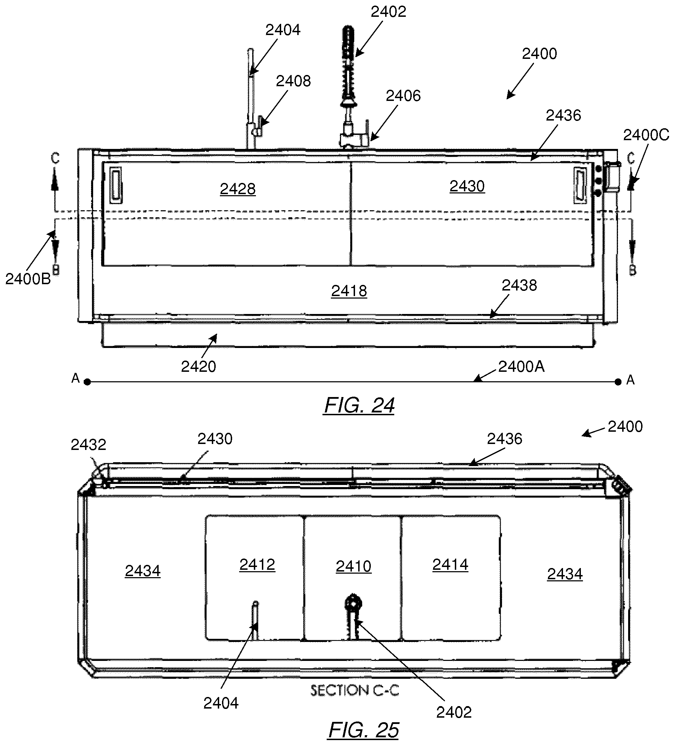

The workstation (100) includes work surface (102), which may be a single flat surface, but which also may include additional components or may be divided into sections for use during different kinds of activities. The work surface (102) may be a cooktop, a cutting surface or cutting board, or a combination of surfaces. The work surface (102) could have other equipment, such as a sink, a heating element, an additional cutting board, a hose and sprayer, and the like. See also FIG. 24 through FIG. 30. The workstation also may include one or more grab rails, such as a first grab rail (104) and a second grab rail (108). In an embodiment, the grab rails are connected to the workstation (100) via three or more connecting pieces, such as connecting piece (106). Similarly, a first foot rail (110) and a second foot rail (111) may be attached to or integral with a bottom portion of the outer skirt (128). Alternatively, the first foot rail (110) and the second foot rail (111) may be disposed on the inner skirt (130) so that the foot rails remain at a constant height relative to a surface (hull, ground, etc.) against which the workstation (100) rests. The first foot rail (110) and second foot rail (111) are connected to one of the inner skirt (130) and outer skirt (128) via a connection that has sufficient strength so that a user may rest his or her foot on the corresponding foot rail while the user uses the workstation 100).

As shown better in FIG. 2 and FIG. 3, a clearance (112) may be present between the surface upon which the workstation (100) rests (i.e., the hull of a ship, the ground, etc.) and a stepwell portion (116) of the inner skirt (130) of the workstation (100). The clearance (112) is provided by the stepwell portion (116) of an inner skirt (130) being displaced inwardly relative to the workstation (100), and also extending downwardly from the bottom portion (114) of the workstation (100). Note that the clearance (112) in both FIG. 2 and FIG. 3 is the same distance, no change in scale is implied between FIG. 2 and FIG. 3 (i.e., there is no change in the sizes of either the inner skirt (130) or the outer skirt (128) when comparing FIG. 2 to FIG. 3 - only that the outer skirt (128) and raised up in a sliding relationship to the inner skirt (130)). A user may place the toes or other part of his or her feet within the clearance (112) in order to allow the user to stand very closely to the workstation (100) and avoid a partially bent over position, or may rest a foot on the first foot rail (110).

The workstation (100) includes one or more sliding doors, such as a first door (118) and a second door (120). The doors may be sliding doors which slide along rail tracks provided in the workstation (100), as shown in FIG. 18. Inset handles, such as handle (122) may be provided for ease of grasping. Sliding one or both of the doors open grants access to a space (124) disposed within the workstation (100). FIG. 2 and FIG. 3 shows the doors of the workstation removed for illustrative purposes. The space (124) is defined by a shelf (126) on the bottom, by the sides of the workstation (100) on the sides, and by the work surface (102) on the top. Note that other embodiments of the workstation (100) may have more than one shelf, in addition to the shelf (126).

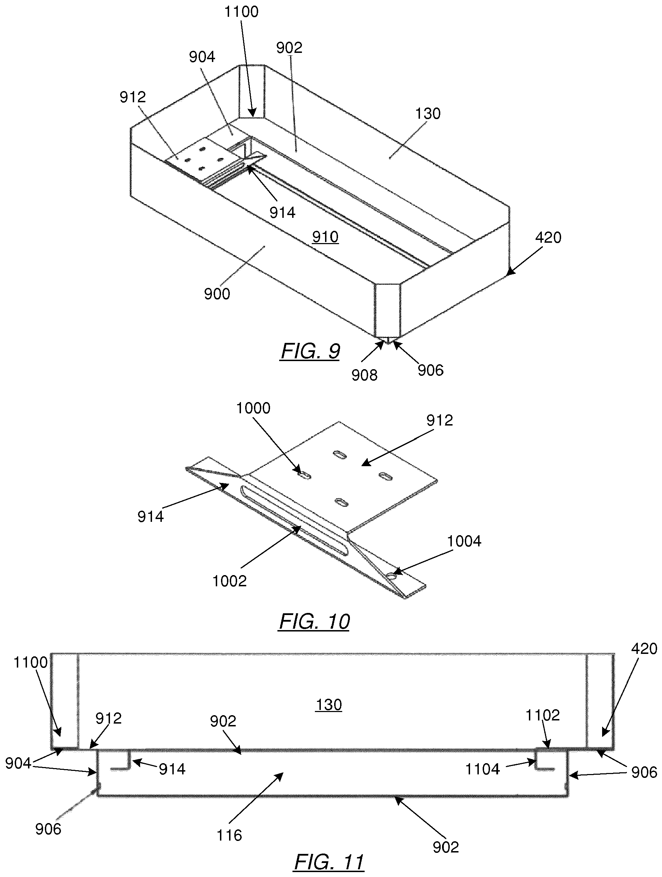

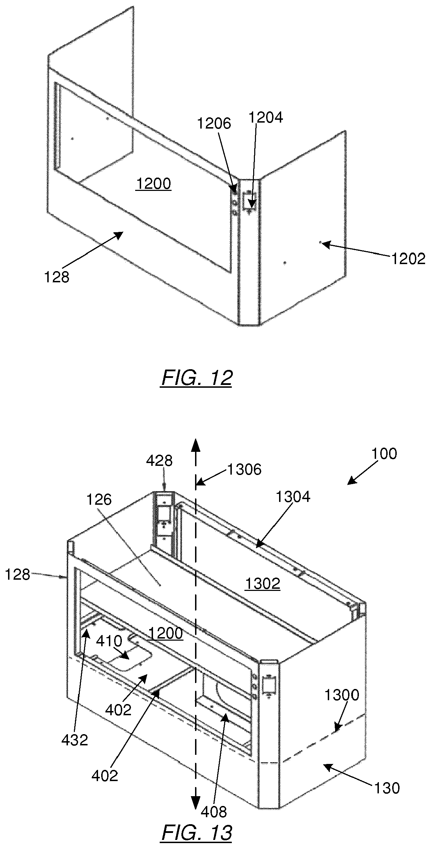

The workstation (100) has a vertical height from the stepwell portion (116) to the work surface (102). The vertical height may be adjusted by means of one or more actuators (see FIG. 17 and FIG. 21). To accommodate the adjustment in height, but to maintain the workstation (100) as a compact workstation, the workstation outer body is defined by the outer skirt (128) that at least partially wraps around the inner skirt (130). This arrangement is shown in FIG. 13 and FIG. 21, with the inner skirt (130) shown in more detail in FIG. 9 and the outer skirt shown in more detail in FIG. 12. The outer skirt (128) and the inner skirt (130) may be sheets of metal or other material bent to accommodate the shape shown in FIG. 1. The outer skirt (128) is in a sliding relationship with respect to the inner skirt (130), as described with respect to FIG. 13.

In an embodiment, when the workstation (100) is in a retracted position (FIG. 2), the outer skirt (128) substantially covers the entire perimeter of the workstation (100). Thus, in the retracted position, the inner skirt (130) may be completely hidden or substantially completely hidden. In the retracted position, the surface of the workstation is lowest with respect to the floor on which the workstation rests. When the workstation (100) is in an extended position, or a partially extended position, then portions of the inner skirt (130) are exposed as the outer skirt (128) slides upwardly relative to the inner skirt (130). The inner skirt (130) does not move as the actuators drive the outer skirt (128) and work surface (102) upwardly. In the extended position, the surface of the workstation is highest with respect to the floor on which the workstation rests. The workstation may also be in a partially retracted or partially extended position.

Additional features may be provided for the workstation (100). For example, up/down buttons (132) may be provided so that the user can incrementally adjust the height of the workstation (100) to a desired height. An electrical outlet (134) may be provided so that the user can plug electrical components (such as powered food preparation utensils) into the electrical outlet (134) and provide power to the electrical components. In an embodiment, the electrical outlet (134) is a three-way electrical single pole double throw (SPTD) switch or button, so that it can be operated at different positions in the or on the workstation (100). Additional electrical outlets may be provided on other portions of the outer skirt (128). Another button (136) may be provided to activate lights disposed either inside the space (124) or outside the workstation (100) (such as on or over the work surface (102)).

In order to decrease the probability of injury if a user accidentally bumps into the workstation (100) while a marine vessel is operating in heavy seas, the workstation (100) may be provided with rounded corners, rounded rails, and other rounded features. Stated differently, the workstation (100) has few, if any, sharp corners or surfaces against which a user could bump. Likewise, the rails are preferably cylindrical and spaced sufficiently from the outer skirt (128) so that a user can grip the rails and/or place his or her feet on the first foot rail (110) that serves as a kick plate and/or foot rest.

Variations of these additional components are possible. For example, a variety of tools could be attached to the outer skirt, and multiple outlets may be provided. More or fewer lights may be provided. A computer may be provided to monitor the use of various aspects of the workstation (100). An air conditioner system may be provided to cool the space (124). More or fewer doors may be provided. A garbage disposal and plumbing may be placed inside the workstation (100) in the case that the workstation (100) is provided with a sink (see FIG. 25). A sensor and/or camera may be provided to automatically estimate a size of the user and then, in conjunction with the computer, automatically adjust the height of the workstation to a recommended height. Many other variations are possible, and thus the embodiments described above should not be construed necessarily to limit the scope of the appended claims.

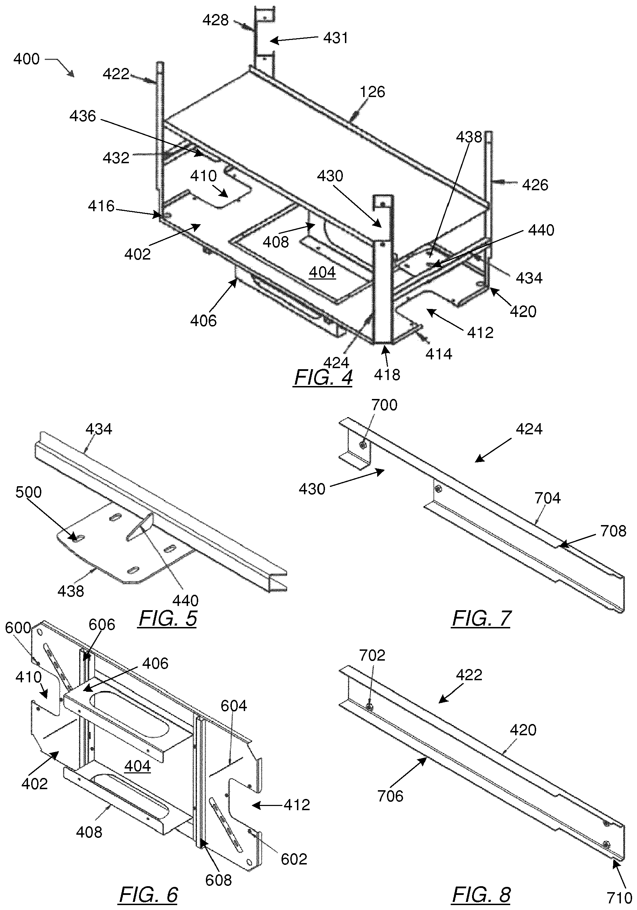

FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, FIG. 18, FIG. 19, FIG. 20, FIG. 21, FIG. 22, and FIG. 23 show different components of a workstation, in accordance with one or more embodiments. These figures show various components of the workstation (100) shown in FIG. 1 through FIG. 3. Therefore, reference numeral from FIG. 1 through FIG. 3 that are used in common with respect to the description of FIG. 4 through FIG. 23 refer to similar objects and share common descriptions. Similarly, as the description of FIG. 4 through FIG. 23 progresses, reference numerals shown in earlier figures, when used in later figures, refer to the same objects and share common descriptions. When taken together, FIG. 4 through FIG. 23 show the relationship of the various components of the workstation (100), as well as the functional components that allow the outer skirt (128) to slide with respect to the inner skirt (130).

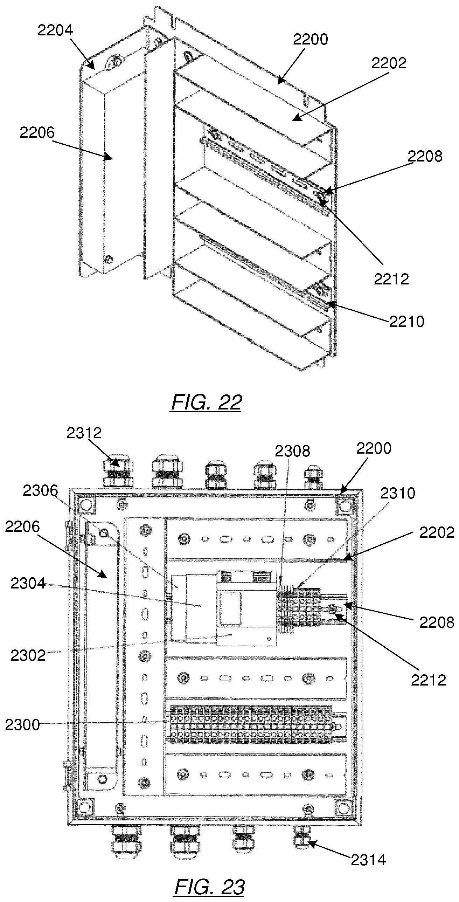

FIG. 4 shows an inner frame (400) of the workstation (100) shown in FIG. 1 through FIG. 3. The term "inner frame" does not necessarily refer to all of the components shown in FIG. 4. Nevertheless, as shown, the inner frame (400) includes frame panel (402). Frame panel (402) is a plate of material (e.g., metal) that may be shaped as shown. In particular, frame panel (402) may include a central cutout (404) which will provide space for additional equipment, such as a junction box and electronic equipment, as shown in FIG. 21 and FIG. 23. Optionally, to aid in holding the additional equipment, a first bracket (406) and a second bracket (408) may be attached to the frame panel (402) on opposite sides relative to the central cutout (404).

The frame panel (402) also includes a first inset (410) and a second inset (412). As shown later in FIG. 17 and FIG. 21, a first actuator (1700) will be disposed through the first inset (410). Similarly, a second actuator (2102) will be disposed through the second inset (412).

Additionally, the frame panel (402) may be bent near the edges in order to form a flange (414) along the perimeter of the frame panel (402). In an embodiment, the corners (i.e., a first corner (416), a second corner (418), a third corner (420), and/or a fourth corner (See FIG. 11)) may have straight edges. In other words, the corners may not be provided with a flanged edge in order to accommodate other structures, such as the cap beams.

In particular, the cap beams include a first cap beam (422), a second cap beam (424), a third cap beam (426), and a fourth cap beam (428). However, in other embodiments more or fewer cap beams may be present. Each cap beam serves as a leg which supports other components of the workstation (100) shown in FIG. 1, as described further below. The cap beams may rest on, but are not attached to, the frame panel (402). As shown in FIG. 7 and FIG. 8, the cap beams may be shaped to accommodate the shape of the frame panel (402) near the corners, including nearby flanges on either side of a given corner.

Optionally, one or more of the cap beams may include a void, such as a first void (430) and second void (431). The first void (430) and second void (431) may serve as spaces to accommodate other equipment, such as electrical outlets, wiring, buttons, switches, tools, or other objects, as desired.

A first mounting brace (432) and a second mounting brace (434) are connected to pairs of cap beams along opposing sides of the inner frame (400). In different embodiments, more or fewer mounting braces may be present. In the embodiment shown in FIG. 4, the first mounting brace (432) is directly attached to the first cap beam (422) and the fourth cap beam (428); however, in other embodiments one or more of these components may be indirectly attached. Similarly, the second mounting brace (434) is directly attached to the second cap beam (424) and the third cap beam (426); however, in other embodiments one or more of these components may be indirectly attached.

A first mount plate (436) may be attached to the first mounting brace (432). Likewise, a second mount plate (438) may be attached to the second mounting brace (434). A first gusset (not shown) may connect and/or reinforce the connection between the first mount plate (436) and the first mounting brace (432). Likewise, a second gusset (440) may connect and/or reinforce the connection between the second mount plate (438) and the second mounting brace (434). Both mount plates are disposed inwardly of the inner frame (400) of the workstation (100). Additionally, the first mount plate (436) is disposed above the first inset (410). Likewise, the second mount plate (438) is disposed above the second inset (412).

The inner frame (400) may also include a shelf (126). The shelf (126) may be attached to one or more of the first cap beam (422), the second cap beam (424), the third cap beam (426), and the fourth cap beam (428). In an embodiment, the shelf is attached to the cap beams above the first mounting brace (432) and the second mounting brace (434), relative to the frame panel (402). While the shelf (126) is shown in FIG. 4 as being disposed below the first void (430), relative to the frame panel (402), any voids (including a second void (431) in the fourth cap beam (428)) may be disposed above, below, or intersecting with the shelf (126).

FIG. 5 shows a different view of the second mounting brace (434), second mount plate (438), and second gusset (440). As shown in FIG. 5, to save weight, increase strength, and/or to provide connection points to an actuator, the second mount plate (438) may include one or more holes or voids, such as mount plate hole (500). Additionally, the second mounting brace (434) may take the shape of a U-shaped rail, though may be solid or have other shapes. The same arrangement may be provided for the first mounting brace (432), first mounting brace (432), and the first gusset.

FIG. 6 shows a different view of the frame panel (402). FIG 6 shows the S-shaped first bracket (406) and second bracket (408). Weld nuts, such as a first weld nut (600) and a second weld nut (602) may be provided to increase a strength of the frame panel (402) in the vicinity of the first inset (410) and second inset (412). Wire guides, such as wire guide (604) may take the form of slots, grooves, or prominences useful for guiding wires that will eventually be disposed under or on top of the frame panel. Furthermore, braces, such as a first brace (606) and a second brace (608) may be provided along the width of the frame panel (402) near the edges of the central cutout (404) to provide greater strength and stability to the frame panel (402).

FIG. 7 shows a different view of the second cap beam (424) (or the fourth cap beam (428)). FIG. 8 shows a different view of the first cap beam (422) (or the third cap beam (426)). One or more weld nuts, such as a third weld nut (700) or fourth weld nut (702) may be provided for additional strength and/or to connect the outer skirt (see FIG. 12) to the cap beams. Each cap beam may be a U-shaped sheet of material by virtue of flanges on either side of the cap beams, such as a first flange (704) and a second flange (706). The first void (430) is shown in the second cap beam (424). Stair-case shaped notches, such as a first notch (708) and a second notch (710), may be disposed along the flanges in order to accommodate the flange (414) disposed along the perimeter of the frame panel (402) near the corners of the frame panel (402).

FIG. 9 shows an inner skirt (130) that wraps at least partially around the frame panel (402) shown in FIG. 4 through FIG. 8, but not shown in FIG. 9. The embodiment shown in FIG. 9 shows the inner skirt (130) wrapping entirely around the frame panel (402); however, a side or part of a side of the inner skirt (130) could be left uncovered in one or more embodiments. The inner skirt (130) is termed "inner" because when the entire workstation (100) is assembled, the inner skirt (130) is disposed inwardly of the workstation (100) relative to the outer skirt (128) shown in FIG. 1 through FIG. 3.

The inner skirt (130) may include a side cover (900) that defines a first perimeter of the inner skirt (130). A first kick plate (902) extends inwardly from one side of the side cover (900), and a second kick plate (904) (perpendicular to the first kick plate (902) extends inwardly from an adjacent side of the side cover (900). A third kick plate (906) and a fourth kick plate (908) extend inwardly from opposing respective sides of the side cover (900). In an embodiment, all of the kickplates are integrally formed with the side cover (900), but one or more of the kickplates may be separate pieces attached to the side cover (900).

As shown in FIG. 9, the hull of a marine vessel or the ground supporting the workstation (100) may be referred to as the hull or ground (910). Thus, the weight of the workstation (100) is supported, in part, by the bottom edge of the kickplates of the inner skirt (130). Additional support for the workstation (100), in the form of mounting feet, may be provided as shown in FIG. 17 and FIG. 21.

Due to the inwardly disposed kickplates, the inner skirt (130) may be described as have a stepwell shape, with the kickplates providing a step within the inner skirt (130). The stepwell shape defines the stepwell portion (116), also shown in FIG. 2 and FIG. 3. A space inside the stepwell portion (116) (see FIG. 1 through FIG. 3 and FIG. 11), which is a space defined between the kickplates and the hull or ground (910). The stepwell portion (116) receives the first bracket (406) and the second bracket (408) and also includes the central cutout (404), all shown in FIG. 4.

As shown in FIG. 9, a third mount plate (912) is shown attached to the second kick plate (904). In the embodiment shown in FIG. 9, a first attachment brace (914) extends from and is integrally formed with the third mount plate (912). The first attachment brace (914) may be formed integrally with the third mount plate (912). As shown in FIG. 21, a base of the first actuator (1700) rests on the third mount plate (912).

The fourth mount plate is not shown in FIG. 9. The fourth mount plate is shown in FIG. 11 and FIG. 21.

FIG. 10 shows an alternative view of the third mount plate (912). The third mount plate (912) may be structured differently from the first mount plate (436) and the second mount plate (438) shown in FIG. 4. In particular, the third mount plate (912) may be formed integrally, or otherwise attached to, the first attachment brace (914). Mount plate holes (1000) may be provided to lighten the third mount plate (912), provide additional strength, and provide a convenient location through which bolts, screws, and other attachment devices may be disposed to connect the third mount plate (912) with the second kick plate (904) of the inner skirt (130).

Additionally, a first attachment brace slot (1002) may be placed in a side of the C-shaped first attachment brace (914) in order to lighten and/or strengthen the first attachment brace (914). A first attachment brace hole (1004), along with possibly other attachment brace holes, may be disposed in the first attachment brace (914) to accommodate adjustable feet, such as first foot (1702) in FIG. 17, that are disposed between the bottom side of the third mount plate (912) and the hull or ground (910).

FIG. 11 shows an alternative view of the inner skirt (130) shown in FIG. 9. In particular, FIG. 11 shows a cut-away side view of the inner skirt (130). The first kick plate (902), the third corner (420), and a fourth corner (1100) of the inner skirt (130) are shown for reference. The fourth corner (1100) is, when viewing FIG. 4, the corner that is opposite the third corner (420) (i.e., the fourth corner that cannot be seen in FIG. 4 as that corner is covered by the shelf (126) in FIG. 4). The location of the fourth corner (1100) is also shown in FIG. 9.

In the view shown in FIG. 11, the third mount plate (912) is attached to the second kick plate (904) via screws, bolts, or other securing devices through the mount plate holes (1000) shown in FIG. 10. A fourth mount plate (1102) is likewise attached to a third kick plate (906) of the inner skirt (130). The fourth mount plate (1102) has a structure similar to that of the third mount plate (912) shown in FIG. 10.

The first attachment brace (914) of the third mount plate (912) extends into the stepwell portion (116) of the inner skirt (130). Likewise, a second attachment brace (1104) of the fourth mount plate (1102) extends into the stepwell portion (116) of the inner skirt (130). The first attachment base (914) and the second attachment brace (1104) serve as reinforcing guides for mounting feet (see FIG. 17 and FIG. 21) that provide additional support between the second kick plate (904) and the hull or ground (910), as well as between the third kick plate (906) and the hull or ground (910).

In an alternative embodiment, a bottom panel for the inner skirt (130) may be placed where the hull or ground (910) is shown. The bottom panel may be integrally formed with the kickplates of the inner skirt (130), or may be a separate component attached to the kickplates and/or inner skirt (130).

FIG. 12 shows at least part of the outer skirt (128). The outer skirt (128) may also wrap completely around in order to completely around the inner frame (400) of FIG. 4, or may wrap only partially around as shown in FIG. 12. The outer skirt (128) may be provided with a doorway (1200) through which a user may access the space (124) inside the workstation (100) (see FIG. 2 and FIG. 3) via doors, such as the first door (118) or the second door (120) shown in FIG. 1. Other cutouts and/or holes, such as hole A (1202) or hole B (1204) or hole C (1206) may be provided in order to provide space for other components or attachment devices (i.e., screws, bolts, etc.).

FIG. 13 shows an intermediate stage of assembly of the workstation (100). The outer skirt (128) is shown disposed around the inner skirt (130), which is represented by a phantom line (1300). In other words, the phantom line (1300) represents the location of the inner skirt (130) within the outer skirt (128), whereby the line itself does not exist. The shelf (126), the frame panel (402), the first inset (410), the first mounting brace (432), the fourth cap beam (428), the second bracket (408), and the doorway (1200) are shown for reference. Thus, FIG. 13 shows that, in one embodiment, the outer skirt (128) may entirely cover the inner skirt (130).

In an alternative embodiment, the outer skirt (128) may be provided with an additional access space (1302) opposite the doorway (1200). The additional access space (1302) may be framed by an inner flange (1304) connected to or integral with the outer skirt (128). The inner flange (1304) may be provided with, or attached to, a rail system that can accommodate sliding doors, such as the first door (118) and the second door (120) shown in FIG. 1. The rail system is shown in FIG. 18 and FIG. 19.

For reference, a central axis (1306) is shown through a center of the workstation (100). The central axis (1306) is shown for reference only. In one embodiment, the central axis (1306) is disposed vertically with respect to a surface upon which the workstation (100) rests (i.e., hull of a ship, the ground, etc.). In other words, the central axis may be perpendicular to the surface upon which the workstation (100) rests.

FIG. 14 shows another intermediate stage of assembly of the workstation (100). The outer skirt (128), shelf (126), the frame panel (402), the first mounting brace (432), the second bracket (408), the first grab rail (104), second grab rail (108), first foot rail (110), second foot rail (111), third cap beam (426), work surface (102), and electrical outlet (134) are shown for reference.

FIG. 14 also shows that the work surface (102) may be surrounded by a ridge (1400) or lip to aid in keeping objects on the work surface (102) from sliding off the work surface (102). The ridge (1400) is especially useful when the workstation (100) is installed on a ship subject to movement in six degrees of freedom while operating in heavy seas.

In some embodiments, the ridge (1400) may be characterized as a "marine edging". Marine edging may be recessed somewhat, may be rounded, and possibly also be made magnetic in order to retain metal components left on the workstation from falling or flying from the workstation (100) when the workstation (100) is installed on a marine vessel subject to heavy seas. In any case, marine edging includes additional features or shapes, other than a simple flange or ridge, that make the edging safer and/or more useful when the workstation (100) is installed on a marine vessel.

FIG. 15 shows a magnified view of the area near the doorway (1200) in FIG. 12 and the electrical outlet (134) shown in FIG. 14. FIG. 15 also is a magnified view within circle D (1606) in FIG. 16.

Disposed within the doorway (1200) is electrical outlet (134), which may be screwed, bolted, or otherwise attached to the outer skirt (128) via one or more of a first screw (1502), a second screw (1504), and possibly additional attachment devices.

FIG. 15 also shows a first button (1506) and a second button (1508). The buttons shown in FIG. 15 may be wash down rated, stainless steel buttons. In the embodiment shown in FIG. 15, the first button (1506) is an "up" button which causes the actuators to raise the outer skirt (128) relative to the inner skirt (130). Similarly, the second button (1508) is a "down" button which causes the actuators to lower the outer skirt (128) relative to the inner skirt (130). The first button (1506) and the second button (1508) may be replaced by single button, may take the form of one or more buttons, one or more flip-switches, and many other different forms and actuators. The first button (1506) and the second button (1508), together, may be the up/down buttons (132) shown in FIG. 1.

Additionally, a light button (1510) may be provided. Alternatively, the light button (1510) may be a power switch which cuts power to one or more of the workstation (100), the electrical outlet (134), the button (136), and/or other powered components that are part of or connected to the workstation (100). In other embodiments, the light button (1510), first button (1506) and second button (1508) may be replaced by outlets or other electrical devices or by other tools. In an embodiment, the light button (1510) may be the button (136) shown in FIG. 1.

FIG. 16 shows a reference view of the workstation (100) shown in FIG. 1. In particular, section G-G (1600) is shown in FIG. 17. Section C-C (1602) is shown in FIG. 18. Section B-B (1604) is shown in FIG. 19. Circle D (1606) is shown in more detail in FIG. 15, above. Section H-H (1608) is shown in FIG. 21.

FIG. 17 shows section G-G (1600) of FIG. 16. The outer skirt (128), the inner skirt (130), work surface (102), shelf (126), second mounting brace (434), and frame panel (402) are shown for reference.

In addition, FIG. 17 also shows a first actuator (1700), which may be one of possibly two or more actuators that are used to lift the outer skirt (128) relative to the inner skirt (130) and the frame panel (402). The first actuator (1700) may be covered by a second column cover (1906) (see FIG. 19 and FIG. 20).

The first actuator (1700) may include a telescoping skirt, as depicted in FIG. 17 and further described with respect to FIG. 21. The telescoping skirt acts as a reinforcement for the actuator so that the actuator does not bend or move on account of horizontal forces or torques that may arise when the workstation (100) is exposed to the motion of heavy seas if installed on a marine vessel. The telescoping skirt may also act to aid in keeping water that splashes onto the workstation from entering the workstation actuators. As shown further in FIG. 21, the telescoping skirt may include two or more sleeves that slide relative to each other as the first actuator (1700) extends and retracts.

In addition, FIG. 17 shows a first foot (1702) and a second foot (1704). The first foot (1702) and the second foot (1704) are disposed between the hull or ground (910) and the respective second and third kickplates of the inner skirt (130), and are further disposed through the first attachment brace (914) and second attachment brace (1104) (shown in FIG. 11). The first and second feet bear at least part of the weight of the workstation (100) when the workstation (100) is placed on a surface (i.e., hull, ground, etc.). The first foot (1702) and the second foot (1704) may be adjustable individually by means of a first nut (1706) and a second nut (1708), respectively. Adjusting the first nut (1706) and the second nut (1708) adjusts a starting height of the workstation, as defined along the central axis (1306) (shown in FIG. 13). The first nut (1706) and the second nut (1708) may be individually adjustable to different heights. Additional feet and accompanying nuts may be present (such as two or more additional foot and nut assemblies behind or in front of the first foot (1702) and the second foot (1704) relative to the view shown in FIG. 17 or FIG. 21). In this manner, particularly when the ground or hull (910) varies in height, the workstation (100) may be installed in a manner that the work surface (102) is a flat, horizontal surface that does not lean to one side or another. This configuration may be particularly useful when installing on a marine vessel where the shape of the hull may be accommodated by adjusting the height of the feet of the workstation (100).

FIG. 18 shows section C-C (1602) of FIG. 16. In this view, various aspects of the workstation (100) may be seen from another perspective. Thus, FIG. 18 shows the shelf (126), the first grab rail (104), the second grab rail (108), the connecting piece (106) (i.e., one of several connecting pieces that connect the grab rails to the outer skirt (128)), the electrical outlet (134), and other aspects of the workstation (100).

In addition, FIG. 18 shows a first door track (1800) connected to or part of the outer skirt (128) (see the inner flange (1304) of FIG. 13). Similarly, a second door rail (1802) may be connected to or part of the outer skirt (128). In other embodiments, one or both of the first door track (1800) and the second door track (1802) are not present.

For the embodiment shown in FIG. 18, the first door (118) and the second door (120) are slidably disposed within the first door track (1800). Similarly, a third door (1804) and a fourth door (1806) are slidably disposed within the second door track (1802). Thus, in this embodiment, objects on the shelf (126) (or shelves in other embodiments) may be accessed by either side of the workstation (100) by opening any of the doors shown in FIG. 18.

Optionally, a first light (1808) and a second light (1810) may be disposed on opposing walls of the outer skirt (128). In this manner, the inner space defined above the shelf (126) and below the work surface may be lit. The lights may be electrically connected to the junction box (see FIG. 21 and FIG. 23) and power supply, or may be battery operated, or may be solar operated if a solar panel electrically connected to the lights is disposed to be exposed to light outside of the workstation (100). More or fewer lights may be present, and the lights may be arranged in different locations than those shown. Whether or not the lights are present, external lighting may also be provided on the workstation (100). Light emitting diodes (LEDs) may be used for any of the lights.

FIG. 19 shows section B-B (1604) of FIG. 16. Thus, FIG. 19 shows frame panel (402), first foot rail (110), and second foot rail (111) for reference. The bottom portion of the first door track (1800) and the second door track (1802) that are also depicted in FIG. 18 are also shown for reference.

FIG. 19 also shows additional features that may be provided for the workstation (100). For example, a hatch (1900) may be slidably or rotatably connected to the frame panel (402). The hatch (1900) can, for example, swing upwardly (out of the page of FIG. 19) to grant access to the central cutout (404) (see FIG. 4) or, more generally, to the space defined within the stepwell portion (116) shown in FIG. 11 (between the kick plates shown in FIG. 9). In an embodiment, opening the hatch grants access to a junction box or other equipment disposed therein (see FIG. 21 through FIG. 23). In another embodiment, the hatch (1900) may simply be attached to one or both of the first bracket (406) or the second bracket (408) (see FIG. 4) by means of one or more hatch screws, such as hatch screw (1902), or by bolts or other securing features. In this case, the hatch may be disengaged by removing the securing features and then pulling the hatch (1900) away from the frame panel (402).

In addition, a first column cover (1904) and a second column cover (1906) may be connected to the frame panel (402) and/or the shelf (126) (also see FIG. 4). In the embodiment shown in FIG. 19, both column covers are connected to the frame panel (402) by means of column cover screws, such as a first column cover screw (1908) and a second column cover screw (1910). More or fewer column cover screws may be present (the embodiment shown in FIG. 19 will use 3 column cover screws per column cover). Any of the column cover screws may be replaced by bolts or other securing features.

The column covers are disposed over and around the actuators, such as the first actuator (1700) shown in FIG. 17. Thus, the column covers help secure and keep debris from falling into the first actuator (1700) or the second actuator (see FIG. 21). Together, the first column cover (1904), second column cover (1906), frame panel (402), and hatch (1900) prevent material from dropping into the stepwell portion (116) of the inner skirt (130). The column covers thus help address an issue of material falling into undesirable portions of the workstation (100) during heavy seas when the workstation (100) is installed on a marine vessel.

FIG. 20 shows a magnified view of the second column cover (1906), with corners oriented as indicated by the first dotted line (2000) and the second dotted line (2002). In an embodiment, the first column cover (1908) may have a similar structure.

FIG. 20 shows additional detail relative to the view in FIG. 19. For example, a first column cover flange (2004), a second column cover flange (2006), and a third column cover flange (2008) allow the second column cover (1906) to rest against and be secured to the frame panel (402). For example, a first column cover hole (2010) in the second column cover flange (2006), and a second column cover hole (2012) in the third column cover flange (2008), allows screws or other securing devices to connect the second column cover (1906) to the frame panel (402).

The column covers may be further secured to the outer skirt (128). For example, one or more tabs, such as tab (2014) of the second column cover (1906), may be attached to, or integrally formed with, the second column cover (1906). A tab hole (2016) may be provided in the tab (214). The tab hole (2016) allows screws or other securing devices to connect the second column cover (1906) to the outer skirt (128).

FIG. 21 shows section H-H (1608) of FIG. 16. Thus, FIG. 21 shows for reference the outer skirt (128) and the inner skirt (130), including the first kickplate (902), the second kickplate (904), and the third kickplate (906) that together form the space for the stepwell portion (116) shown in FIG. 1 and FIG. 11. Also shown are the third door (1804) and the fourth door (1806) from FIG. 18, which are disposed in the door tracks mounted in or on the inner flange (1304) from FIG. 13. Also shown are the shelf (126) and frame panel (402) shown in FIG. 2 through FIG. 4. The electrical outlet (134) is secured by screws or other attachment devices such as bracket screw (2100). Finally, also shown for reference are the first mount plate (436), second mount plate (438), third mount plate (912), and fourth mount plate (1102).

The first actuator (1700) is disposed between the first mount plate (436) and the third mount plate (912). A second actuator (2102) is disposed between the second mount plate (438) and the fourth mount plate (1102). In an embodiment, each actuator is directly connected to both corresponding mount plates, particularly for embodiments where the workstation (100) is intended for use in a marine vessel that expects to operate in heavy seas. For example, a mount plate screw (2103), or other connecting device, is shown connecting the third mount plate (912) to the first actuator (1700). Thus, for example, the first actuator (1700) is arranged to change a distance between the first mount plate (436) and the third mount plate (912).

In an embodiment, the first actuator (1700) and the second actuator (2102) may be configured to operate in tandem (though not always to the same height, as described further below). Thus, when the actuators extend, they exert force on the first mount plate (436) and the second mount plate (438). In response, the outer skirt (128), frame panel (402), shelf (126), first column cover (1904), second column cover (1906) and all other directly or indirectly connected components all rise together with the first actuator (1700) and the second actuator (2102). The downward force exerted by extending the actuators is absorbed by the third mount plate (912), the fourth mount plate (1102), and thence by the kickplates of the inner skirt (130) and by feet, such as first foot (1702) and second foot (1704). Additional feet, covered by the feet shown in FIG. 21, may also lend additional support. Due to this arrangement of components, the total storage space accessible through the doors does not change when the actuators are extended or retracted.

When the actuators are retracted, the opposite set of forces and events occurs. The actuators pull on the mounting plates, causing the outer skirt (128) and all directly and indirectly connected components to move downwardly relative to the inner skirt (130). During either extension or retraction, the outer skirt (128) slides over the inner skirt (130). In an embodiment, in a fully retracted state the bottom edge of the outer skirt (128) reaches to the kickplates. In a fully extended state, the bottom edge of the outer skirt (128) still covers the top edge of the inner skirt (130); thus, foreign material will not enter the areas containing the actuators or the junction box (2104).

While the one or more embodiments contemplate a workstation with just one actuator, in the context of a marine embodiment, the workstation (100) may have two or more actuators for added strength, steadiness, and flexibility. The number of actuators may depend upon the design and shape of the workstation, as well as the intended load to be carried by the workstation. Furthermore, the shape of the marine vessel or other installation location can also influence the number and placement of actuators within the workstation.

For example, a marine vessel may have an "uneven" ship hull, at the point of installation, where hull starts to rise. In this case, a first actuator (nearer the rising hull) may operate in tandem with a second actuator (farther from the rising hull). However, the first actuator will move less distance than the second actuator. In this manner, the work surface remains level and at a constant height, relative to the user.

The actuators may be electrical, pneumatic, or of any other suitable type. However, the actuators may have a maximum output force of more than 600 kg in order to provide sufficient security when used on a marine vessel. The actuators may be electrically connected to the junction box (2104), such as by wires (2106). The actuators may be operated by utilizing the appropriate buttons shown in FIG. 1 and FIG. 15.

To provide additional structural strength, particularly with respect to torques and horizontal loads expected when the workstation (100) is installed on a marine vessel, the actuators may be surrounded by telescoping skirts, such as telescoping skirt (2108). Each telescoping skirt includes a number of layers composed of two or more nested cylindrical structures. In the embodiment shown in FIG. 21, three nested cylindrical structures are shown, inner layer (2110), middle layer (2112), and outer layer (2114). The bottom edges of the nested cylindrical structures may be staggered, as shown in FIG. 21, or may be flushed with each other when the corresponding actuator is in a retracted position. In an extended position, the nested cylindrical structures slide with respect to each other to accommodate the extension of the actuator, while still reinforcing the structural integrity of the actuator with respect to horizontal forces and torques that may be applied as a result of a marine vessel operating in heavy seas.

Near the bottom of the workstation (100) is shown the second bracket (408) and a junction box (2104). The junction box (2104) is disposed within the central cutout (404) framed by the first bracket (406) (not shown in FIG. 21) and the second bracket (408). The junction box (2104) may contain electrical wiring, computer equipment, capacitors, resistors, transistors, power supplies, processors, non-transitory computer readable storage media, or any other electrical equipment useful for controlling or providing power to the workstation (100) or tools that are connected to the workstation (100). Thus, for example, the junction box (2104) may perform the processing necessary to control a computer display and computer input devices mounted to the workstation (100).

Optionally, a junction box cover (2116) may be disposed around the junction box (2104) to provide additional protection against any foreign material that might gain entry into the space defined by the stepwell portion (116). The junction box (2104) may be further secured by means of junction box screws, such as junction box screw (2118), or other attachment devices.

FIG. 21 also shows another optional configuration for interior lighting. In particular, an LED strip (2120) is connected to an inner wall of the outer skirt (128) via clamp (2122) and clamp bolt (2124) or other attachment device. Additional LED strips may also be present inside or outside the workstation (100).

FIG. 22 and FIG. 23 show an example of the junction box (2104) shown in FIG. 21. In particularly, FIG. 22 shows junction box tray (2200) and FIG. 23 shows certain electrical components disposed in the junction box tray (2200). To accommodate the electrical components, the junction box tray (2200) may include a number of rails, such as tray rail (2202). The tray rail (2202) may be a U-shaped piece of material, though other shapes are possible for holding different types of components. Alternatively, the tray rails may act as reinforcement for the junction box tray (2200) and/or protecting walls for electrical components.

In addition, the junction box tray (2200) may include a retainer (2204) attached to the junction box tray (2200) for retaining a larger component, such as control unit (2206). The control unit may include a processor and a non-transitory computer readable storage medium. The control unit may also be a power supply or other electronics for regulating power distribution to electrical components connected to the workstation (100). The control unit may contain other electronics specialized to control individual components that are attached to or otherwise plugged into the workstation (100). The control unit may be a combination of any of these components.

Furthermore, tray brackets, such as first tray bracket (2208) or second tray bracket (2210) may be used as a rail mount to attach electrical components to the junction box tray (2200). Either or both of tray bracket (2208) or tray bracket (2210) may reinforce attachment devices, such as attachment device (2212), that connect the junction box tray (2200) to another part of the workstation (100). The junction box tray (2200) may be connected to one or more different components of the workstation (100), such as but not limited to the hatch (1900) shown in FIG. 19, the first bracket (406) and/or second bracket (408) shown in FIG. 21, and/or an optional bottom panel (which would be placed where the hull or ground (910) is shown in FIG. 9).

FIG. 23 shows an alternate view of the junction box tray (2200) shown in FIG. 21. Tray rail (2202), control unit (2206), and tray bracket (2210) are shown for reference. However, FIG. 23 shows the junction box tray (2200) at least partially filled with control components, which may be electrical components, mechanical control components, or a combination thereof.

In an embodiment, the control components may include a first terminal block (2300), a power supply (2302), a circuit breaker (2304), a fuse holder (2306), a ground terminal block (2308), a second terminal block (2310), and a number of bolt and nut assemblies, including a first bolt and nut assembly (2312) and a second bolt and nut assembly (2314). These control components are only for purposes of example, as the junction box tray (2200) may include many different kinds of electrical components. Additionally, control components may also be disposed in other parts of the workstation (100).

In an embodiment, the terminal blocks provide electrical terminals for electrical devices disposed in the workstation (100). The electrical devices may include but are not limited to lights, conduction or electrical heating elements, displays, electrical outlets, the up/down switches or buttons, the actuators, electric tools connected to the workstation (100) and possibly many other different components that are part of or connected to the workstation (100).

The power supply (2302) may be used to regulate voltage to parts of the workstation (100) or throughout the workstation (100) when connected to an external power source, and/or to provide battery power to the workstation (100). The circuit breaker (2304) may break one or more electrical circuits within the workstation (100) in case of a power surge. Fuses disposed inside the fuse holder (2306) may be part of the circuit breaker (2304).

In addition to the above components, the junction box tray (2200) may also include one or more bolt and nut assemblies, such as first bolt and nut assembly (2312) and second bolt and nut assembly (2314). Each bolt and nut assembly may be manipulated in order to relieve stress or to apply stress to different parts of the junction box tray (2200).

In use, when first button (1506) or up/down buttons (132) are pressed, the actuators (first actuator (1700) and second actuator (2102)) are triggered. The triggering of the actuators extends the actuators, causing an upward force against the upper mount plates (i.e., first mount plate (436) and third mount plate (438)). Through the connection to the upper mount plates, the entire inner frame (400) (including first door (118), second door (120), shelf (126), frame panel (402), cap beams, etc.) all move upwardly. By virtue of the connection to the inner frame (400), the outer skirt (128) concurrently moves upward along with work surface (102). Because the inner skirt (130) is not connected to the outer skirt (128), the inner skirt (130) is stationary and more of the inner skirt (130) is exposed as the outer skirt (128) raises upwardly.

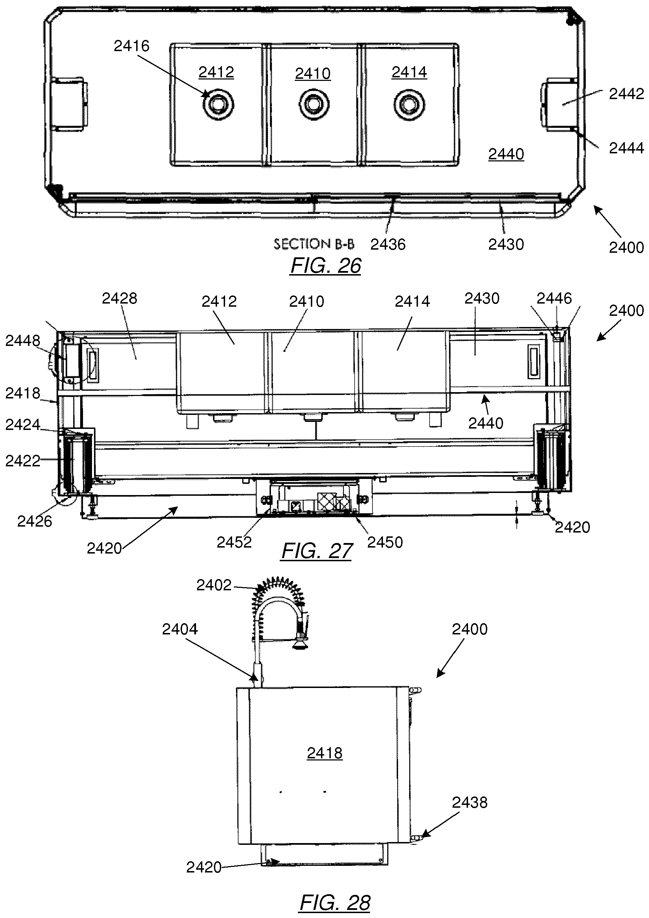

The workstation (100) shown in FIG. 1 through FIG. 23 is just one example of the embodiments described herein. Different embodiments are also contemplated. For example, FIG. 24 through FIG. 28 show different views of an alternative embodiment of the workstation (100) shown in FIG. 1 through FIG. 23, in accordance with one or more embodiments. Thus, for example, FIG. 25 shows alternate section C-C (2400C), FIG. 26 shows alternate section B-B (2400B), and FIG. 27 shows alternate section A-A (2400A). A side view of plumbed workstation (2400) is shown in FIG. 28. For purposes of the following description, FIG. 24 through FIG. 28 should be viewed together. With respect to the description of FIG. 24 through FIG. 28, terms used in common with respect to FIG. 1 through FIG. 24 refer to similar objects with similar functions; however, the reference numerals are different to reflect that a different embodiment is being described.

Plumbed workstation (2400) is similar to workstation (100), though is wider than workstation (100). However, plumbed workstation (2400) also includes main faucet (2402) and secondary faucet (2404). The main faucet (2404) may be termed a "hose and sprayer"; the secondary faucet (2404) could be termed a hot water and/or filtered water dispenser. The main faucet (2402) is controlled with main valve handle (2406). The secondary faucet (2404) is controlled is controlled with secondary valve handle (2408). Additional plumbing (not shown) with the plumbed workstation (2400) connects the main faucet (2402) and the secondary faucet (2404) to a water source on the marine vessel or within the building in which the plumbed workstation (2400) is installed.

As shown in FIG. 25 through FIG. 26, water from the faucets drains into one or more sinks, such as primary sink (2410), secondary sink (2412), and tertiary sink (2414). Drains, such as drain (2416) in FIG. 26, provide outlets for water to flow into the plumbing (not shown).

However, the plumbed workstation (2400) includes several features in common with workstation (100) shown in FIG. 1 through FIG. 23. For example, as shown in FIG. 24, FIG. 27, and FIG. 28, the plumbed workstation (2400) includes an alternate outer skirt (2418) that is slidably disposed with respect to an alternate inner skirt (2420). One or more actuators, such as an alternate actuator (2422), press against opposing mount plates, such as an alternate first mount plate (2424) and an alternate second mount plate (2426), in order to force the alternate outer skirt (2418) upwardly relative to the alternate inner skirt (2420). See FIG. 27.

Additionally, one or more doors, such as alternate first door (2428) and alternate second door (2430) (FIG. 24, FIG. 25, and FIG. 27), slide along an alternate door track (2432) in order to provide access to an interior storage space disposed within the plumbed workstation (2400). Likewise, an alternate worksurface (2434) (FIG. 25) disposed around the sinks provide an area where a user can perform tasks. One or more grab rails, such as alternate grab rail (2436) (FIG. 24, FIG. 25 and FIG. 26), may be attached to the alternate outer skirt (2418). Similarly, one or more foot rails, such as alternate foot rail (2438) (FIG. 24 and FIG. 28)

Additionally, an alternate frame panel (2440) (FIG. 26 and FIG. 27) is provided within the interior space of the plumbed workstation (2400). As shown in FIG. 26, column covers, such as alternate column cover (2442), cover the actuators and also moves up and down together with the alternate frame panel (2440) as the actuators extend and retract. The alternate column cover (2442) may be attached to the alternate frame panel (2440) via fasteners, such as alternate fastener (2444). An LED light strip (2446) may be disposed within the plumbed workstation (2400) in order to light the interior space. An alternate electrical outlet (2448) may provide power to tools connected to the plumbed workstation (2400) or to various components of the plumbed workstation (2400) itself. An alternate junction box (2450), containing various control components as described with respect to FIG. 24 and FIG. 25, may be attached to the alternate frame panel (2440) via an alternate frame brace (2452).

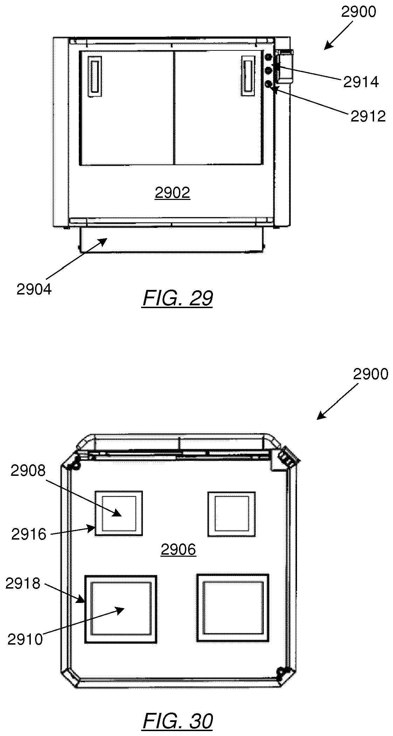

FIG. 29 and FIG. 30 show different views of another alternative embodiment of a workstation, in accordance with one or more embodiments. In particular, FIG. 29 shows a side view of a cooking workstation (2900), and FIG. 30 shows a top view of the cooking workstation (2900). For purposes of the following description, FIG. 29 and FIG. 30 should be viewed together. With respect to the description of FIG. 29 and FIG. 30, terms used in common with respect to FIG. 1 through FIG. 24 refer to similar objects with similar functions; however, the reference numerals are different to reflect that a different embodiment is being described.

Cooking workstation (2900) may be narrower than the workstation (100) shown in FIG. 1, though the size of cooking workstation (2900) may vary. Cooking workstation (2900) includes a modified outer skirt (2902) and a modified inner skirt (2904). The term "modified" with respect to FIG. 29 and FIG. 30 only refers to the size of the component in question, though it is contemplated that a "modified" component may be the same size as similarly components shown in FIG. 2 through Fig. 28. Although not shown, a similar arrangement of internal components to those shown in FIG. 1 through FIG. 28, including actuators, may be used to slidably raise and lower the modified outer skirt (2902) with respect to the modified inner skirt (2904) as the actuators extend and retract.

As shown in FIG. 30, the cooking workstation (2900) may include a modified work surface (2906) which may include one or more heating elements, such as first heating element (2908) and second heating element (2910). Each heating element may be, particularly for a marine environment, an inductive heating element. However, the heating elements may also be electrical or gas heating elements in other embodiments. The heating elements may be controlled via control actuators, such as control knob (2912), which is shown next to modified up/down buttons (2914) that control the actuators that raise and lower the modified outer skirt (2902). Different forms of buttons, knobs, switches, and the like are contemplated for any control actuator or button described herein.

In addition, a number of retaining features, such as first retaining feature (2916) and second retaining feature (2918) may be disposed around (or partially around) the heating elements. A retaining feature is a clamp, wall, flange, clip, or other mechanical object which helps retain a pot, pan, or other cooking utensil to remain in place on a corresponding heating element during cooking. The retaining feature may be passive (such as a rail that retains the cooking utensil) or active (such as a releasable lock or clamp that connects the cooking utensil to the modified work surface (2906)). Retaining features are particularly useful when the cooking workstation (2900) is disposed on a marine vessel which is subject to the motion caused by heavy seas. As the cooking workstation (2900) moves in six degrees of freedom as the marine vessel moves with the seas, the retaining features may prevent the cooking utensil from leaving the heating element and/or modified work surface (2906).

Although not shown, various components of the plumbing workstation and/or cooking workstation may be located within workstation (100) of FIGs. 1-23. For example, workstation (100) may be equipped with plumbing and/or heating elements.

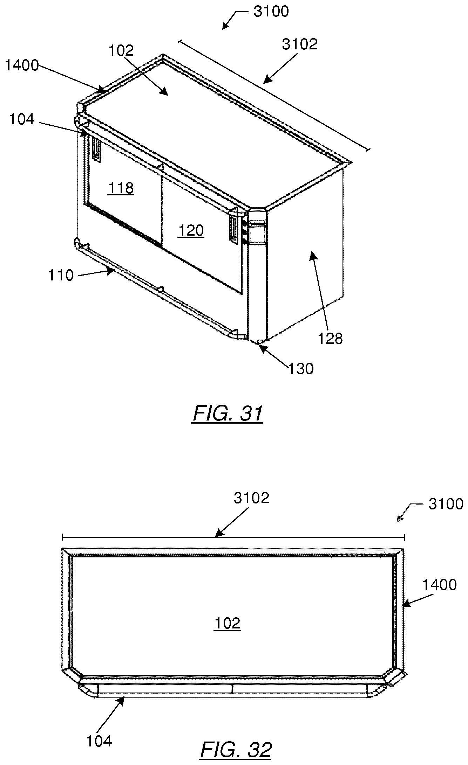

Various embodiments of the workstation described herein may be provided as an island (such as including grab rails and foot rails on both sides of the workstation). However, referring to FIG. 31 and FIG. 32, the workstations described herein may all be modified for use as a wall unit, as in wall workstation (3100). Wall workstation (3100) has many of the same features described with respect to FIG. 1 through FIG. 21, for example, as represented by using reference numerals from those figures to refer to similar objects with similar descriptions. Thus, considering FIG. 31 and FIG. 32 together, shown are work surface (102), first grab rail (104), foot rail (110), outer skirt (128), inner skirt (130), first door (118), second door (120), and ridge (1400) around the work surface (102). The wall workstation may also be provided with other features, such as plumbing, sinks, heating elements, or other tools or features as described above.

In addition, wall workstation (3100) is provided with a straight edge with ninety-degree corners on a side (3102) of the workstation. In this manner, the side (3102) of the workstation may be easily installed against a wall, or may be installed directly against another workstation with no gaps between workstations or other surfaces on the side (3102).

Further variations are also possible. For example, the workstations described herein can be placed together as modular units depending upon the size of the galley etc. For example, a U-shaped configuration (whether an island as in FIG. 1-23 or a wall workstation as in FIG. 31-32) or L-shaped workstation may be provided, as well as other shaped workstations. Each of the differently shaped work stations may be actuated so that the height of the work surface may be adjusted relative to the user.

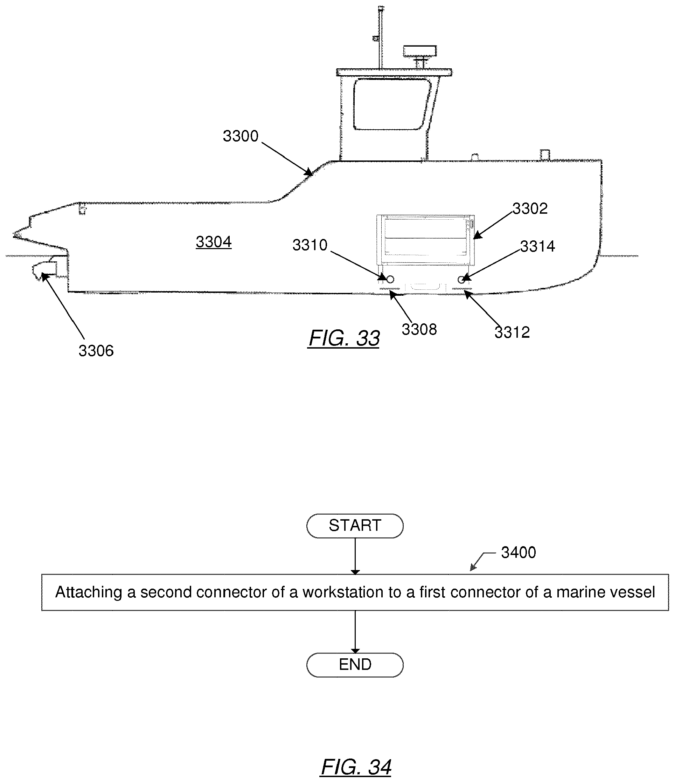

FIG. 33 shows a marine vessel modified to carry a workstation, in accordance with one or more embodiments. Marine vessel (3300) may be any kind of boat, ship, yacht, or naval vessel of a sufficient size to a mount marine workstation (3302). The marine vessel (3300) includes a maritime hull (3304) and may include a propulsion system (3306). Note that the marine vessel (3300) need not include a propulsion system, or may include sails instead of the propulsion system (3306). The marine vessel (3300) may also include a first connector (3308) for connecting objects to the maritime hull (3304).

The marine workstation (3302) may be any of workstation (100) of FIG. 1 through FIG. 23, plumbed workstation (2400) of FIG. 24 through FIG. 28, and cooking workstation (2900) of FIG. 29 and FIG. 30. The marine workstation (3302) may be further modified in one or more embodiments to include a second connector (3310). The second connector (3310) may be attached, either directly or indirectly (via an intervening component such as a clamp, rope, or chain) to the first connector (3308). In this manner, the marine workstation (3302) may be secured to the maritime hull (3304) so that the marine workstation (3302) substantially does not move about within the marine vessel (3300) while the marine vessel (3300) operates in open waters.

Additional connectors are contemplated. Thus, for example, the marine vessel (3300) may be provided with a third connector (3312) which may be connected directly or indirectly to a fourth connector (3314) of the marine workstation (3302). Note that any of the connectors described herein may be located on different locations with respect to the maritime hull (3304) and/or the marine workstation (3302).

FIG. 34 is a flowchart of a method for modifying a marine vessel to carry a workstation, in accordance with one or more embodiments. The marine vessel may be modified during construction or building of the marine vessel, or may be modified as a retrofit or after-construction installment of a workstation. At step 3400, the marine vessel is modified by attaching a second connector of a workstation to a first connector of a marine vessel. The workstation may be any of workstation (100) of FIG. 1 through FIG. 23, plumbed workstation (2400) of FIG. 24 through FIG. 28, cooking workstation (2900) of FIG. 29 and FIG. 30, and marine workstation (3302) of FIG. 33.

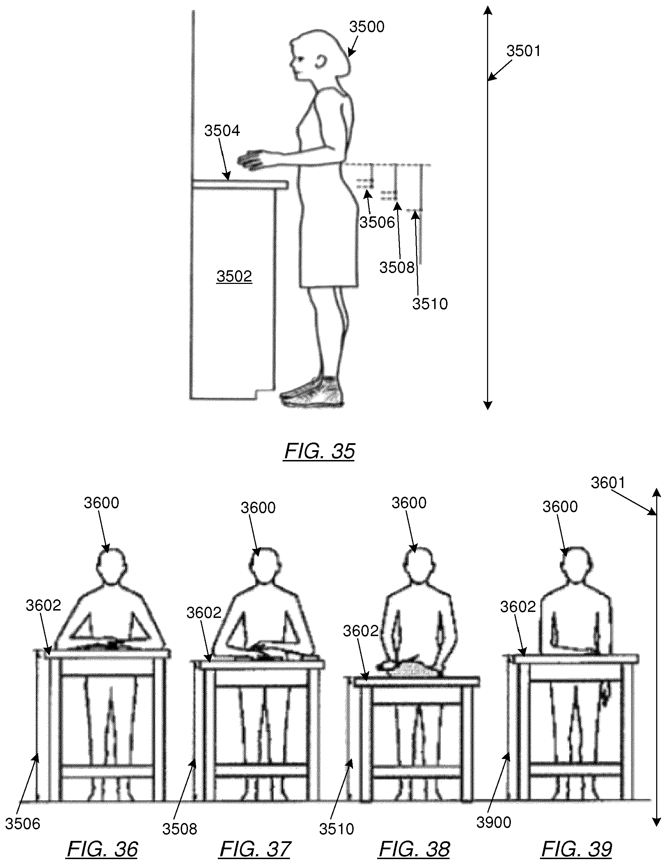

FIG. 35 through FIG. 39 disclose ergonomic working heights during food preparation activities, and possibly other types of activities. FIG. 35 through FIG. 39 should be considered together. FIG. 35 through FIG. 39 show that the stance of a cook is improved as the one or more embodiments described herein enable the cook to change position frequently if required to meet health and safety guidelines, by changing a height of the adjustable workstations described herein.

In particular, FIG. 35 shows different ideal ergonomic working heights for a cook (3500) working at a constant-height workstation (3502). As used with respect to FIG. 35, the term "height" refers to a distance extending along a Z-axis (3501). While FIG. 35 is described with respect to food preparation, a similar description may apply for other types of activities.

The constant-height workstation (3502) in this example has a constant-height preparation surface (3504), such as a typical countertop in a home or business. However, even if the constant-height workstation (3502) is appropriately sized for one activity for the cook (3500), the constant-height workstation (3502) is not appropriately sized for another activity for the cook (3500).

Specifically, in the example shown in FIG. 35, the constant-height workstation (3502) is sized for precision work for the cook (3500), as indicated by first height (3506). For precision work, the preparation surface should be a few centimetres (inches) below the elbow (7,62-10,16 cm (3-4 inches), for example, depending on the size of the cook (3500)).

However, the height of the constant-height workstation (3502) should be (but cannot be) adjusted downwardly for different kinds of work in order to maximize the ergonomics of different activities. For example, for light work, the preparation surface (3504) should be several centimetres (such as 12,7-15,24 cm (5-6 inches)) below the elbow, as indicated by second height (3508). Light work may include, for example, cooking and moving pots and pans during cooking or cleaning. At this lower height, splashing of hot oil or other materials is significantly less likely to strike the cook (3500) in the face.

The height of the constant-height workstation (3502) should be (but cannot be) adjusted still further downwardly for other kinds of work to maximize the ergonomics of still other activities. For example, for heavy work, the preparation surface (3504) should be a significant fraction of a foot (such as 20,32-25,4 cm (8-10 inches)) below the elbow, as indicated by third height (3510). Heavy work may include, for example, heavy cutting, rolling, kneading, or lifting activities.

The ergonomic issues of working with the constant height workstation (3502) when performing activities at non-ergonomic heights may include significant back, shoulder, arm, hand, and even leg or foot strain and injury, as well as other physical ailments, particularly during extended activities. These issues may be exacerbated when a different cook (3500) is using the workstation (3500). For example, if the cook (3500) is taller or shorter, then strain or injury may be significantly worse compared to those that the cook (3500) may suffer.

FIG. 36 through FIG. 39 show an advantage of the one or more embodiments of the adjustable workstations described herein. In particular, the cook (3600) may adjust the height of the adjustable workstation (3602) to the correct ergonomic heights shown in FIG. 35. As used with respect to FIG. 36 through FIG. 39, the term "height" refers to a distance extending along a common Z-axis (3601). Note that the various internal components of the adjustable workstation (3602) are not shown in FIG. 36 through FIG. 39 in order to show the legs of the cook (3602).

Thus, for example, FIG. 36 shows the adjustable workstation (3602) adjusted to the first height (3506) shown in FIG. 35 for when the cook (3600) is performing fine work. FIG. 37 shows the adjustable workstation (3602) adjusted to the second height (3508) when performing light work. FIG. 38 shows the adjustable workstation (3602) adjusted to the third height (3510) when performing heavy work. FIG. 39 shows that the workstation may be adjusted to an intermediate height (3900) at the convenience of the cook (3600).

Whether or not the workstation is installed on a marine vessel, the workstation may be used for food preparation, tool use, or whatever purpose the user deems fit. During use, operation of the workstation may include actuating the actuator or actuators inside the workstation to change a height of the outer skirt relative to the inner skirt. In this manner, the user may adjust the height of the workstation relative to the ground or hull of a marine vessel to whatever height is best for that particular person for a specific selected task being performed on the workstation.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A workstation (100) comprising:
a frame panel (402) comprising a first inset (410);
a plurality of cap beams (422, 424, 426, 428) connected to the frame panel (402);
an inner skirt (130) connected to and disposed at least partially around the frame panel (402), the inner skirt (130) comprising a stepwell portion (116) comprising a kickplate (902, 904, 906, 908) disposed at least partially around the frame panel (402);
a first mount plate (436) connected to the kickplate (902, 904, 906, 908) of the inner skirt (130) and extending inwardly relative to the workstation (100);
an outer skirt (128) disposed at least partially around the inner skirt (130), wherein the outer skirt (128) is slidable with respect to the inner skirt (130) in a direction parallel to a central axis (1306);
a first mounting brace (432) connected to at least two of the plurality of cap beams (422, 424, 426, 428);
a second mount plate (438) connected to the first mounting brace (432) and disposed inwardly relative to the workstation (100);
a first actuator (1700) disposed between the first mount plate (436) and the second mount plate (438), and through the first inset (410), wherein the first actuator (1700) is configured to change in length and hence to change a distance between the first mount plate (436) and the second mount plate (438); and
a work surface (102) connected to the outer skirt (128).

2. The workstation (100) of claim 1, further comprising:
a telescoping skirt (2108) disposed around the around the first actuator (1700) and through the first inset (410), the telescoping skirt (2108) reinforcing the first actuator (1700) around a longitudinal axis of the first actuator (1700).

3. The workstation (100) of claim 1 wherein the plurality of cap beams (422, 424, 426, 428) are connected to respective corners (416, 418, 420) of the frame panel (402).

4. The workstation (100) of claim 1, wherein the outer skirt (128) is longer than the inner skirt (130) in a direction parallel to the central axis (1306), the workstation (100) further comprising:
a shelf (126) connected to and between the plurality of cap beams (422, 424, 426, 428), and further disposed between the frame panel (402) and the work surface (102); and optionally further comprising:
a sliding door (118, 120) disposed in a rail track (1800, 1802) connected to the outer skirt (128), the sliding door (118, 120) allowing access to a first space (124) above the shelf (126); and optionally
wherein the sliding door (118, 120) further allows access to a second space (1302) between the shelf (126) and the frame panel (402).

5. The workstation (100) of claim 1, wherein the work surface (102) comprises at least one of:
a flat surface (2434);
a sink (2410, 2412, 2414);
a cooktop;
an induction heating element;
a gas heating element;
an electric heating element;
a hose and a sprayer to the hose (2404);
a cutting board; and
a grab rail (104, 108) connected to the outer skirt (128) adjacent the work surface (102) and extending outwardly from the outer skirt (128), and a foot rail (110, 111) connected to the inner skirt (130) adjacent the kickplate (902, 904, 906, 908) and extending outwardly from the inner skirt (130).

6. The workstation (100) of claim 1, further comprising:
a heating element (2908, 2910) connected to the work surface (2906); and
a retaining feature (2916, 2918) connected to the work surface (2906) and disposed proximate to the heating element (2908, 2910), the retaining feature (2916, 2918) configured to retain a cooking utensil with respect to at least one of the work surface (2906) and the heating element (2916, 2918).

7. The workstation of (100) claim 1, further comprising:
a button (1506) connected to the outer skirt (128) and electrically connected to the first actuator (1700); and
an electrical outlet (134) connected to the outer skirt (128) and to one of the plurality of cap beams (422, 424, 426, 428).

8. The workstation (100) of claim 1, wherein the outer skirt (128) substantially covers the inner skirt (130) when the first actuator (1700) is in a retracted position.

9. The workstation (100) of claim 1, further comprising:
a column cover (1904) connected to the outer skirt (128) and to the frame panel (402), the column cover (1904) covering the first actuator (1700), and
wherein the mounting brace (432) is further directly connected to the outer skirt (128).

10. The workstation (100) of claim 1, wherein a second inset (412) is disposed in the frame panel (402) opposite the first inset (410), and wherein the workstation (100) further comprises:
a third mount plate (912) connected to the kickplate (902, 904, 906, 908) opposite the first mount plate (436), the third mount plate (912) extending inwardly relative to the workstation (100);
a second mounting brace (434) connected to at least two of the plurality of cap beams (422, 424, 426, 428), opposite the first mounting brace (432);
a fourth mount plate (1102) connected to the second mounting brace (434) and disposed inwardly relative to the workstation (100), the fourth mount plate (1102) disposed opposite the second mount plate (438); and
a second actuator (2102) connected to, and disposed between, the third mount plate (912) and the fourth mount plate (1102), the second actuator (2102) further disposed through the second inset (412), and the second actuator (2102) configured to change in length and hence to change a second distance between the third mount plate (912) and the fourth mount plate (1102), and
wherein the first actuator (1700) and the second actuator (2102) are configured to operate in tandem.

11. The workstation (100) of claim 1, further comprising:
a junction box (2104) connected to a bracket (408) attached to the frame panel (402), the bracket (408) extending below the inner skirt (130) relative to the work surface (102), the junction box (2104) electrically connected to the first actuator (1700),
wherein a space exists between a first outer edge of the bracket (408) and a second outer edge of the inner skirt (130); and optionally further comprising:
a plurality of mounting feet (1702, 1704) connected to the second mount plate (438) and the fourth mount plate (1102) and extending outwardly relative to the frame panel (402), wherein the plurality of mounting feet (1702, 1704) each are adjustable to lengths greater than or equal to a distance the frame extends from the inner skirt (130); or
optionally further comprising:
a plurality of light emitting diode (LED) lights (2120, 2446) connected to an inner wall of the outer skirt (128) and electrically connected to the junction box (2104).

12. The workstation (100) of claim 1, wherein the outer skirt (128), the inner skirt (130), the frame panel (402), and the work surface (102) have rounded corners.

13. The workstation of claim 1, further comprising:
a gusset (440) directly connected to the first mounting brace (432) and the second mount plate (438).

14. A method of modifying a marine vessel (3300) comprising a maritime hull (3304), a propulsion system (3306) connected to the maritime hull (3304), and a first connector (3308) connected to the maritime hull (3304), the method comprising:
attaching a second connector (3310) of the workstation (3302) to the first connector (3308) of the marine vessel (3300), the workstation (3302) comprising:
a frame panel (402) comprising a first inset (410);
a plurality of cap beams (422, 424, 426, 428) slidably disposed with respect to corners of the frame panel (402), the plurality of cap beams (422, 424, 426, 428) slidable in a direction parallel to a central axis (1306) that is perpendicular to the frame panel (402);
an inner skirt (130) connected to and disposed at least partially around the frame panel (402), the inner skirt (130) comprising a stepwell portion (116) comprising a kickplate (902, 904, 906, 908) disposed at least partially around the frame panel (402);
a first mount plate (436) connected to the kickplate (902, 904, 906, 908) of the inner skirt (130) and extending inwardly relative to the workstation (3302);
an outer skirt (128) disposed at least partially around the inner skirt (130), wherein the outer skirt (128) is slidable with respect to the inner skirt (130) in a direction parallel to the central axis (1306);
a first mounting brace (432) connected to at least two of the plurality of cap beams (422, 424, 426, 428);
a second mount plate (438) connected to the first mounting brace (423) and disposed inwardly relative to the workstation (3302);
a first actuator (1700) disposed between the first mount plate (436) and the second mount plate(438), and through the first inset (410), wherein the first actuator (1700) is configured to change in length and hence to change a distance between the first mount plate (436) and the second mount plate (438); and
a work surface (102) connected to the outer skirt (128).

15. A method of using a workstation (100), the workstation (100)comprising: a frame panel (402) comprising a first inset (410); a plurality of cap beams (422, 424, 426, 428) slidably disposed with respect to corners of the frame panel (402), the plurality of cap beams (422, 424, 426, 428) slidable in a direction parallel to a central axis (1306) that is perpendicular to the frame panel (402); an inner skirt (130) connected to and disposed at least partially around the frame panel (402), the inner skirt (130) comprising a stepwell portion (116) comprising a kickplate (902, 904, 906, 908) disposed at least partially around the frame panel (402); a first mount plate (436) connected to the kickplate (902, 904, 906, 908) of the inner skirt (130) and extending inwardly relative to the workstation (100); an outer skirt (128) disposed at least partially around the inner skirt (130), wherein the outer skirt (128) is slidable with respect to the inner skirt (130) in a direction parallel to the central axis (1306); a first mounting brace (432) connected to at least two of the plurality of cap beams(422, 424, 426, 428); a second mount plate (438) connected to the first mounting brace (432) and disposed inwardly relative to the workstation (100); a first actuator (1700) disposed between the first mount plate (436) and the second mount plate (438), and through the first inset (410), wherein the first actuator (1700) is configured to change in length and hence to change a distance between the first mount plate (436) and the second mount plate (438); and a work surface (102) connected to the outer skirt (128), and wherein the method comprises:
actuating the actuator (1700) to change a height of the outer skirt (128) relative to the inner skirt (130).

## Patentansprüche

1. Arbeitsplatz (100), umfassend:
ein Rahmenpaneel (402) mit einer ersten Einsenkung (410);
eine Mehrzahl von Auflagerbalken (422, 424, 426, 428), die mit dem Rahmenpaneel (402) verbunden sind;
eine innere Blende (130), die mit dem Rahmenpaneel (402) verbunden ist und zumindest teilweise um dieses herum angeordnet ist, wobei die innere Blende (130) einen Trittschachtabschnitt (116) umfasst, der eine Trittplatte (902, 904, 906, 908) umfasst, die zumindest teilweise um das Rahmenpaneel (402) herum angeordnet ist;
eine erste Befestigungsplatte (436), die mit der Trittplatte (902, 904, 906, 908) der inneren Blende (130) verbunden ist und sich relativ zu dem Arbeitsplatz (100) nach innen erstreckt;
eine äußere Blende (128), die zumindest teilweise um die innere Blende (130) herum angeordnet ist, wobei die äußere Blende (128) in Bezug auf die innere Blende (130) in einer Richtung parallel zu einer Mittelachse (1306) verschiebbar ist;
eine erste Befestigungsstrebe (432), die mit mindestens zwei der Mehrzahl von Auflagerbalken (422, 424, 426, 428) verbunden ist;
eine zweite Befestigungsplatte (438), die mit der ersten Befestigungsstrebe (432) verbunden ist und relativ zu dem Arbeitsplatz (100) nach innen angeordnet ist;
ein erstes Betätigungselement (1700), das zwischen der ersten Befestigungsplatte (436) und der zweiten Befestigungsplatte (438) und durch die erste Einsenkung (410) hindurch angeordnet ist, wobei das erste Betätigungselement (1700) dazu eingerichtet ist, sich in der Länge zu ändern und somit einen Abstand zwischen der ersten Befestigungsplatte (436) und der zweiten Befestigungsplatte (438) zu ändern; und
eine Arbeitsfläche (102), die mit der äußeren Blende (128) verbunden ist.

2. Arbeitsplatz (100) nach Anspruch 1, ferner umfassend:
eine teleskopierbare Blende (2108), die um das erste Betätigungselement (1700) herum und durch die erste Einsenkung (410) hindurch angeordnet ist, wobei die teleskopierbare Blende (2108) das erste Betätigungselement (1700) um eine Längsachse des ersten Betätigungselements (1700) herum verstärkt.

3. Arbeitsplatz (100) nach Anspruch 1, wobei die Mehrzahl von Auflagerbalken (422, 424, 426, 428) mit jeweiligen Ecken (416, 418, 420) des Rahmenpaneels (402) verbunden sind.

4. Arbeitsplatz (100) nach Anspruch 1, wobei die äußere Blende (128) in einer Richtung parallel zur Mittelachse (1306) länger ist als die innere Blende (130), wobei der Arbeitsplatz (100) ferner umfasst:
ein Regal (126), das mit und zwischen der Mehrzahl von Auflagerbalken (422, 424, 426, 428) verbunden ist und ferner zwischen dem Rahmenpaneel (402) und der Arbeitsfläche (102) angeordnet ist; und optional ferner umfassend:
eine Schiebetür (118, 120), die in einer mit der äußeren Blende (128) verbundenen Schienenbahn (1800, 1802) angeordnet ist, wobei die Schiebetür (118, 120) den Zugang zu einem ersten Raum (124) oberhalb des Regals (126) ermöglicht; und optional
wobei die Schiebetür (118, 120) fernerden Zugang zu einem zweiten Raum (1302) zwischen dem Regal (126) und dem Rahmenpaneel (402) ermöglicht.

5. Arbeitsplatz (100) nach Anspruch 1, wobei die Arbeitsfläche (102) mindestens eines umfasst von:
einer ebenen Oberfläche (2434);
einem Spülbecken (2410, 2412, 2414);
einem Kochfeld;
einem Induktionsheizelement;
einem Gasheizelement;
einem elektrischen Heizelement;
einem Schlauch und einer Sprühvorrichtung für den Schlauch (2404);
einem Schneidebrett; und
einer Griffschiene (104, 108), die mit der äußeren Blende (128) benachbart zu der Arbeitsfläche (102) verbunden ist und sich von der äußeren Blende (128) nach außen erstreckt, und einer Fußschiene (110, 111), die mit der inneren Blende (130) benachbart zu der Trittplatte (902, 904, 906, 908) verbunden ist und sich von der inneren Blende (130) nach außen erstreckt.

6. Arbeitsplatz (100) nach Anspruch 1, ferner umfassend:
ein Heizelement (2908, 2910), das mit der Arbeitsfläche (2906) verbunden ist; und
ein Rückhaltemerkmal (2916, 2918), das mit der Arbeitsfläche (2906) verbunden und in der Nähe des Heizelements (2908, 2910) angeordnet ist, wobei das Rückhaltemerkmal (2916, 2918) dazu eingerichtet ist, ein Kochutensil in Bezug auf die Arbeitsfläche (2906) und/oder das Heizelement (2916, 2918) zurückzuhalten.

7. Arbeitsplatz nach Anspruch 1 (100), ferner umfassend:
einen Knopf (1506), der mit der äußeren Blende (128) verbunden ist und elektrisch mit dem ersten Betätigungselement (1700) verbunden ist; und
eine elektrische Steckdose (134), die mit der äußeren Blende (128) und mit einem von der Mehrzahl von Auflagerbalken (422, 424, 426, 428) verbunden ist.

8. Arbeitsplatz (100) nach Anspruch 1, wobei die äußere Blende (128) die innere Blende (130) im Wesentlichen abdeckt, wenn sich das erste Betätigungselement (1700) in einer zurückgezogenen Position befindet.

9. Arbeitsplatz (100) nach Anspruch 1, ferner umfassend:
eine Säulenabdeckung (1904), die mit der äußeren Blende (128) und mit dem Rahmenpaneel (402) verbunden ist, wobei die Säulenabdeckung (1904) das erste Betätigungselement (1700) abdeckt, und
wobei die Befestigungsstrebe (432) ferner direkt mit der äußeren Blende (128) verbunden ist.

10. Arbeitsplatz (100) nach Anspruch 1, wobei eine zweite Einsenkung (412) in dem Rahmenpaneel (402) gegenüber der ersten Einsenkung (410) angeordnet ist, und wobei der Arbeitsplatz (100) ferner umfasst:
eine dritte Befestigungsplatte (912), die mit der Trittplatte (902, 904, 906, 908) gegenüber der ersten Befestigungsplatte (436) verbunden ist, wobei sich die dritte Befestigungsplatte (912) relativ zu dem Arbeitsplatz (100) nach innen erstreckt;
eine zweite Befestigungsstrebe (434), die mit mindestens zwei von der Mehrzahl von Auflagerbalken (422, 424, 426, 428) gegenüber der ersten Befestigungsstrebe (432) verbunden ist;
eine vierte Befestigungsplatte (1102), die mit der zweiten Befestigungsstrebe (434) verbunden und relativ zu dem Arbeitsplatz (100) nach innen angeordnet ist, wobei die vierte Befestigungsplatte (1102) gegenüber der zweiten Befestigungsplatte (438) angeordnet ist; und
ein zweites Betätigungselement (2102), das mit der dritten Befestigungsplatte (912) und der vierten Befestigungsplatte (1102) verbunden und zwischen diesen angeordnet ist, wobei das zweite Betätigungselement (2102) ferner durch die zweite Einsenkung (412) hindurch angeordnet ist und das zweite Betätigungselement (2102) dazu eingerichtet ist, sich in der Länge zu ändern und somit einen zweiten Abstand zwischen der dritten Befestigungsplatte (912) und der vierten Befestigungsplatte (1102) zu ändern, und
wobei das erste Betätigungselement (1700) und das zweite Betätigungselement (2102) dazu eingerichtet sind, im Tandem zu arbeiten.

11. Arbeitsplatz (100) nach Anspruch 1, ferner umfassend:
eine Anschlussdose (2104), die mit einer an dem Rahmenpaneel (402) angebrachten Halterung (408) verbunden ist, wobei sich die Halterung (408) relativ zu der Arbeitsfläche (102) unterhalb der innere Blende (130) erstreckt und die Anschlussdose (2104) elektrisch mit dem ersten Betätigungselement (1700) verbunden ist,
wobei zwischen einer ersten Außenkante der Halterung (408) und einer zweiten Außenkante der inneren Blende (130) ein Zwischenraum besteht;
und optional ferner umfassend:
eine Mehrzahl von Befestigungsfüßen (1702, 1704), die mit der zweiten Befestigungsplatte (438) und der vierten Befestigungsplatte (1102) verbunden sind und sich relativ zu dem Rahmenpaneel (402) nach außen erstrecken, wobei die Mehrzahl von Befestigungsfüßen (1702, 1704) jeweils auf Längen einstellbar sind, die größer oder gleich einem Abstand sind, in dem sich der Rahmen von der inneren Blende (130) erstreckt; oder
optional ferner umfassend:
eine Mehrzahl von Leuchtdioden (LED) (2120, 2446), die mit einer Innenwand der äußeren Blende (128) verbunden sind und elektrisch mit der Anschlussdose (2104) verbunden sind.

12. Arbeitsplatz (100) nach Anspruch 1, wobei die äußere Blende (128), die innere Blende (130), das Rahmenpaneel (402) und die Arbeitsfläche (102) abgerundete Ecken aufweisen.

13. Arbeitsplatz nach Anspruch 1, ferner umfassend:
ein Eckblech (440), das direkt mit der ersten Befestigungsstrebe (432) und der zweiten Befestigungsplatte (438) verbunden ist.

14. Verfahren zum Modifizieren eines Wasserfahrzeugs (3300), das einen Schiffsrumpf (3304), ein mit dem Schiffsrumpf (3304) verbundenes Antriebssystem (3306) und einen mit dem Schiffsrumpf (3304) verbundenen ersten Verbinder (3308) umfasst, wobei das Verfahren umfasst:
Anbringen eines zweiten Verbinders (3310) des Arbeitsplatzes (3302) an dem ersten Verbinder (3308) des Wasserfahrzeugs (3300), wobei der Arbeitsplatz (3302) umfasst:
ein Rahmenpaneel (402) das eine erste Einsenkung (410) umfasst;
eine Mehrzahl von Auflagerbalken (422, 424, 426, 428), die in Bezug auf die Ecken des Rahmenpaneels (402) verschiebbar angeordnet sind, wobei die Mehrzahl von Auflagerbalken (422, 424, 426, 428) in einer Richtung parallel zu einer Mittelachse (1306), die senkrecht zu dem Rahmenpaneel (402) verläuft, verschiebbar ist;
eine innere Blende (130), die mit dem Rahmenpaneel (402) verbunden und zumindest teilweise um dieses herum angeordnet ist, wobei die innere Blende (130) einen Trittschachtabschnitt (116) umfasst, der eine Trittplatte (902, 904, 906, 908) umfasst, die zumindest teilweise um das Rahmenpaneel (402) herum angeordnet ist;
eine erste Befestigungsplatte (436), die mit der Trittplatte (902, 904, 906, 908) der inneren Blende (130) verbunden ist und sich relativ zu dem Arbeitsplatz (3302) nach innen erstreckt;
eine äußere Blende (128), die zumindest teilweise um die innere Blende (130) herum angeordnet ist, wobei die äußere Blende (128) in Bezug auf die innere Blende (130) in einer Richtung parallel zu der Mittelachse (1306) verschiebbar ist;
eine erste Befestigungsstrebe (432), die mit mindestens zwei von der Mehrzahl von Auflagerbalken (422, 424, 426, 428) verbunden ist;
eine zweite Befestigungsplatte (438), die mit der ersten Befestigungsstrebe (423) verbunden und relativ zum Arbeitsplatz (3302) nach innen angeordnet ist;
ein erstes Betätigungselement (1700), das zwischen der ersten Befestigungsplatte (436) und der zweiten Befestigungsplatte (438) und durch die erste Einsenkung (410) hindurch angeordnet ist, wobei das erste Betätigungselement (1700) dazu eingerichtet ist, sich in der Länge zu ändern und somit einen Abstand zwischen der ersten Befestigungsplatte (436) und der zweiten Befestigungsplatte (438) zu ändern; und
eine Arbeitsfläche (102), die mit der äußeren Blende (128) verbunden ist.

15. Verfahren zum Verwenden eines Arbeitsplatzes (100), wobei der Arbeitsplatz (100) umfasst: ein Rahmenpaneel (402), das eine erste Einsenkung (410) umfasst; eine Mehrzahl von Auflagerbalken (422, 424, 426, 428), die in Bezug auf die Ecken des Rahmenpaneels (402) verschiebbar angeordnet sind, wobei die Mehrzahl von Auflagerbalken (422, 424, 426, 428) in einer Richtung parallel zu einer Mittelachse (1306), die senkrecht zu dem Rahmenpaneel (402) verläuft, verschiebbar sind; eine innere Blende (130), die mit dem Rahmenpaneel (402) verbunden und zumindest teilweise um dieses herum angeordnet ist, wobei die innere Blende (130) einen Trittschachtabschnitt (116) umfasst, der eine Trittplatte (902, 904, 906, 908) umfasst, die zumindest teilweise um das Rahmenpaneel (402) herum angeordnet ist; eine erste Befestigungsplatte (436), die mit der Trittplatte (902, 904, 906, 908) der inneren Blende (130) verbunden ist und sich relativ zum Arbeitsplatz (100) nach innen erstreckt; eine äußere Blende (128), die zumindest teilweise um die innere Blende (130) herum angeordnet ist, wobei die äußere Blende (128) in Bezug auf die innere Blende (130) in einer Richtung parallel zur Mittelachse (1306) verschiebbar ist; eine erste Befestigungsstrebe (432), die mit mindestens zwei von der Mehrzahl von Auflagerbalken (422, 424, 426, 428) verbunden ist; eine zweite Befestigungsplatte (438), die mit der ersten Befestigungsstrebe (432) verbunden und relativ zum Arbeitsplatz (100) nach innen angeordnet ist; ein erstes Betätigungselement (1700), das zwischen der ersten Befestigungsplatte (436) und der zweiten Befestigungsplatte (438) und durch die erste Einsenkung (410) hindurch angeordnet ist, wobei das erste Betätigungselement (1700) dazu eingerichtet ist, sich in der Länge zu ändern und somit einen Abstand zwischen der ersten Befestigungsplatte (436) und der zweiten Befestigungsplatte (438) zu ändern; und eine Arbeitsfläche (102), die mit der äußeren Blende (128) verbunden ist, und wobei das Verfahren umfasst:
Betätigen des Betätigungselements (1700), um eine Höhe der äußeren Blende (128) relativ zu der inneren Blende (130) zu ändern.

## Revendications

1. Poste de travail (100) comprenant :
un panneau de châssis (402) comprenant une première entaille (410) ;
une pluralité de montants (422, 424, 426, 428) raccordés au panneau de châssis (402) ;
un tablier interne (130) raccordé au et disposé au moins partiellement autour du panneau de châssis (402), le tablier interne (130) comprenant une partie d'emmarchement (116) comprenant un socle (902, 904, 906, 908) disposé au moins partiellement autour du panneau de châssis (402) ;
une première plaque de montage (436) raccordée au socle (902, 904, 906, 908) du tablier interne (130) et s'étendant vers l'intérieur par rapport au poste de travail (100) ;
un tablier externe (128) disposé au moins partiellement autour du tablier interne (130), le tablier externe (128) pouvant coulisser par rapport au tablier interne (130) dans une direction parallèle à un axe central (1306) ;
une première entretoise de montage (432) raccordée à au moins deux de la pluralité de montants (422, 424, 426, 428) ;
une seconde plaque de montage (438) raccordée à la première entretoise de montage (432) et disposée vers l'intérieur par rapport au poste de travail (100) ;
un premier actionneur (1700) disposé entre la première plaque de montage (436) et la seconde plaque de montage (438), et à travers la première entaille (410), le premier actionneur (1700) étant configuré pour changer de longueur et par conséquent changer une distance entre la première plaque de montage (436) et la seconde plaque de montage (438) ; et
une surface de travail (102) raccordée au tablier externe (128).

2. Poste de travail (100) selon la revendication 1, comprenant en outre :
un tablier télescopique (2108) disposé autour du premier actionneur (1700) et à travers la première entaille (410), le tablier télescopique (2108) renforçant le premier actionneur (1700) autour d'un axe longitudinal du premier actionneur (1700).

3. Poste de travail (100) selon la revendication 1, dans lequel la pluralité de montants (422, 424, 426, 428) sont raccordés à des coins respectifs (416, 418, 420) du panneau de châssis (402).

4. Poste de travail (100) selon la revendication 1, dans lequel le tablier externe (128) est plus long que le tablier interne (130) dans une direction parallèle à l'axe central (1306), le poste de travail (100) comprenant en outre :
une étagère (126) raccordée à et entre la pluralité de montants (422, 424, 426, 428), et en outre disposée entre le panneau de châssis (402) et la surface de travail (102) ; et en option comprenant en outre :
une porte coulissante (118, 120) disposée dans un guide à rail (1800, 1802) raccordé au tablier externe (128), la porte coulissante (118, 120) permettant l'accès à un premier espace (124) au-dessus de l'étagère (126) ; et en option
dans lequel la porte coulissante (118, 120) permet en outre un accès à un second espace (1302) entre l'étagère (126) et le panneau de châssis (402).

5. Poste de travail (100) selon la revendication 1, dans lequel la surface de travail (102) comprend au moins un(e) parmi :
une surface plane (2434) ;
un évier (2410, 2412, 2414) ;
une table de cuisson ;
un élément chauffant à induction,
un élément chauffant à gaz,
un élément chauffant électrique ;
un tuyau et une douchette reliée au tuyau (2404) ;
une planche à découper ; et
une barre d'appui (104, 108) raccordée au tablier externe (128) adjacent à la surface de travail (102) et s'étendant vers l'extérieur depuis le tablier externe (128), et un repose-pieds (110, 111) raccordé au tablier interne (130) adjacent au socle (902, 904, 906, 908) et s'étendant vers l'extérieur depuis le tablier interne (130).

6. Poste de travail (100) selon la revendication 1, comprenant en outre :
un élément chauffant (2908, 2910) raccordé à la surface de travail (2906) ; et
un élément de retenue (2916, 2918) raccordé à la surface de travail (2906) et disposé à proximité de l'élément chauffant (2908, 2918), l'élément de retenue (2916, 2918) étant configuré pour retenir un ustensile de cuisine par rapport à au moins l'un(e) parmi la surface de travail (2906) et l'élément chauffant (2916, 2918).

7. Poste de travail (100) selon la revendication 1, comprenant en outre :
un bouton (1506) raccordé au tablier externe (128) et relié électriquement au premier actionneur (1700) ; et
une prise électrique (134) raccordée au tablier externe (128) et à l'un de la pluralité des montants (422, 424, 426, 428).

8. Poste de travail (100) selon la revendication 1, dans lequel le tablier externe (128) couvre sensiblement le tablier interne (130) lorsque le premier actionneur (1700) est en une position rétractée.

9. Poste de travail (100) selon la revendication 1, comprenant en outre :
une couverture colonne (1904) raccordée au tablier externe (128) et au panneau de châssis (402), la couverture colonne (1904) couvrant le premier actionneur (1700), et
dans lequel l'entretoise de montage (432) est en outre raccordée directement au tablier externe (128).

10. Poste de travail (100) selon la revendication 1, dans lequel une seconde entaille (412) est disposée dans le panneau de châssis (402) en étant opposée à la première entaille (410), et dans lequel le poste de travail (100) comprend en outre :
une troisième plaque de montage (912) raccordée au socle (902, 904, 906, 908), opposée à la première plaque de montage (436), la troisième plaque de montage (912) s'étendant vers l'intérieur par rapport au poste de travail (100) ;
une seconde entretoise de montage (434) raccordée à au moins deux de la pluralité de montants (422, 424, 426, 428), opposée à la première entretoise de montage (432) ;
une quatrième plaque de montage (1102) raccordée à la seconde entretoise de montage (434) et disposée vers l'intérieur par rapport au poste de travail (100), la quatrième plaque de montage (1102) étant disposée en étant opposée à la seconde plaque de montage (438) ; et
un second actionneur (2102) raccordé à, et disposé entre, la troisième plaque de montage (912) et la quatrième plaque de montage (1102), le second actionneur (2102) étant en outre disposé à travers la seconde entaille (412), et le second actionneur (2102) étant configuré pour changer de longueur et par conséquent changer une seconde distance entre la troisième plaque de montage (912) et la quatrième plaque de montage (1102) ; et
le premier actionneur (1700) et le second actionneur (2102) étant configurés pour fonctionner en tandem.

11. Poste de travail (100) selon la revendication 1, comprenant en outre :
une boîte de jonction (2104) raccordée à un support (408) fixé au panneau de châssis (402), le support (408) s'étendant au-dessous du tablier interne (130) par rapport à la surface de travail (102), la boîte de jonction (2104) étant reliée électriquement au premier actionneur (1700).
dans lequel un espace existe entre un premier bord externe du support (408) et un second bord externe du tablier interne (130) ; et
en option comprenant en outre :
une pluralité de pieds de montage (1702, 1704) raccordés à la seconde plaque de montage (438) et à la quatrième plaque de montage (1102) et s'étendant vers l'extérieur par rapport au panneau de châssis (402), la pluralité de pieds de montage (1702, 1704) étant chacun ajustables en longueurs supérieures ou égales à une distance sur laquelle le châssis s'étend depuis le tablier interne (130) ; ou
en option comprenant en outre :
une pluralité de voyants (2120, 2446) à base de diodes électroluminescentes (LED) raccordés à une paroi interne du tablier externe (128) et reliés électriquement à la boîte de jonction (2104).

12. Poste de travail (100) selon la revendication 1, dans lequel le tablier externe (128), le tablier interne (130), le panneau de châssis (402) et la surface de travail (102) ont des coins arrondis.

13. Poste de travail (100) selon la revendication 1, comprenant en outre :
un gousset (440) raccordé directement à la première entretoise de montage (432) et à la seconde plaque de montage (438).

14. Procédé de modification d'un navire (3300) comprenant une coque (3304), un système de propulsion (3306) raccordé à la coque (3304), et un premier connecteur (3308) raccordé à la coque (3304), le procédé comprenant :
attacher un second connecteur (3310) du poste de travail (3302) au premier connecteur (3308) du navire (3300), le poste de travail (3302) comprenant :
un panneau de châssis (402) comprenant une première entaille (410) ;
une pluralité de montants (422, 424, 426, 428) disposés de façon à pouvoir coulisser par rapport aux coins du panneau de châssis (402), la pluralité de montants (422, 424, 426, 428) pouvant coulisser dans une direction parallèle à un axe central (1306) qui est perpendiculaire au panneau de châssis (402) ;
un tablier interne (130) raccordé au et disposé au moins partiellement autour du panneau de châssis (402), le tablier interne (130) comprenant une partie d'emmarchement (116) comprenant un socle (902, 904, 906, 908) disposé au moins partiellement autour du panneau de châssis (402) ;
une première plaque de montage (436) raccordée au socle (902, 904, 906, 908) du tablier interne (130) et s'étendant vers l'intérieur par rapport au poste de travail (3302) ;
un tablier externe (128) disposé au moins partiellement autour du tablier interne (130), le tablier externe (128) pouvant coulisser par rapport au tablier interne (130) dans une direction parallèle à l'axe central (1306) ;
une première entretoise de montage (432) raccordée à au moins deux de la pluralité de montants (422, 424, 426, 428) ;
une seconde plaque de montage (438) raccordée à la première entretoise de montage (432) et disposée vers l'intérieur par rapport au poste de travail (3302) ;
un premier actionneur (1700) disposé entre la première plaque de montage (436) et la seconde plaque de montage (438), et à travers la première entaille (410), le premier actionneur (1700) étant configuré pour changer de longueur et par conséquent changer une distance entre la première plaque de montage (436) et la seconde plaque de montage (438) ; et
une surface de travail (102) raccordée au tablier externe (128).

15. Procédé d'utilisation d'un poste de travail (100), le poste de travail (100) comprenant un panneau de châssis (402) comprenant une première entaille (410) ; une pluralité de montants (422, 424, 426, 428) disposés en pouvant coulisser par rapport aux coins du panneau de châssis (402), la pluralité de montants (422, 424, 426, 428) pouvant coulisser dans une direction parallèle à un axe central (1306) qui est perpendiculaire au panneau de châssis (402) ; un tablier interne (130) raccordé au et disposé au moins partiellement autour du panneau de châssis (402), le tablier interne (130) comprenant une partie d'emmarchement (116) comprenant un socle (902, 904, 906, 908) disposé au moins partiellement autour du panneau de châssis (402) ; une première plaque de montage (436) raccordée au socle (902, 904, 906, 908) du tablier interne (130) et s'étendant vers l'intérieur par rapport au poste de travail (100) ; un tablier externe (128) disposé au moins partiellement autour du tablier interne (130), le tablier externe (128) pouvant coulisser par rapport au tablier interne (130) dans une direction parallèle à l'axe central (1306) ; une première entretoise de montage (432) raccordée à au moins deux de la pluralité de montants (422, 424, 426, 428) ; une seconde plaque de montage (438) raccordée à la première entretoise de montage (432) et disposée vers l'intérieur par rapport au poste de travail (100) ; un premier actionneur (1700) disposé entre la première plaque de montage (436) et la seconde plaque de montage (438), et à travers la première entaille (410), le premier actionneur (1700) étant configuré pour changer de longueur et par conséquent changer une distance entre la première plaque de montage (436) et la seconde plaque de montage (438) ; et une surface de travail (102) raccordée au tablier externe (128), et le procédé comprenant :
actionner l'actionneur (1700) pour changer une hauteur du tablier externe (128) par rapport au tablier interne (130).
